# FASCICULE DE BREVET EUROPEEN

(11) **EP 4 502 850 B1**
(45) Date de publication et mention de la délivrance du brevet: **21.01.2026**
(21) Numéro de dépôt: 24184823.3
(22) Date de dépôt: 26.06.2024
(51) Int. Cl.: G06F 21/71, G06F 21/75

(54) **MICROPROCESSEUR ÉQUIPÉ D'UN MODULE MATÉRIEL DE SÉCURISATION**
MIKROPROZESSOR MIT EINEM SICHERUNGSMATERIALMODUL
MICROPROCESSOR WITH A HARDWARE SECURITY MODULE

(30) Priorité: 31.07.2023 FR 2308277
(43) Date de publication de la demande: 05.02.2025
(73) Titulaire: Commissariat à l'Energie Atomique et aux Energies Alternatives, 75015 Paris (FR)
(72) Inventeur: SAVRY, Olivier, 38054 GRENOBLE Cedex 9 (FR)
(74) Mandataire: INNOV-GROUP

(56) Documents cités:
- EP-A1- 4 089 559
- EP-B1- 2 490 148
- WALI I ET AL: "A Hybrid Fault-Tolerant Architecture for Highly Reliable Processing Cores", JOURNAL OF ELECTRONIC TESTING, KLUWER ACADEMIC PUBLISHERS, DORDRECHT, NL, vol. 32, no. 2, 1 March 2016 (2016-03-01), pages 147 - 161, XP035655926, ISSN: 0923-8174, [retrieved on 20160301], DOI: 10.1007/S10836-016-5578-0

## Description

L'invention concerne un microprocesseur équipé d'un module matériel de sécurisation et un procédé d'exécution d'un code machine à l'aide de ce microprocesseur.

Pour obtenir des informations sur un code binaire ou provoquer un fonctionnement inattendu du code binaire, de nombreuses attaques sont possibles. Par exemple, des attaques connues sous le terme d'« injection de fautes » ou « fault attack » en anglais peuvent être mises en œuvre. Ces attaques consistent à perturber le fonctionnement du microprocesseur ou de la mémoire contenant le code binaire, par divers moyens physiques comme des modifications des tensions d'alimentation, des modifications du signal d'horloge, l'exposition du microprocesseur à des ondes électromagnétiques et autres.

À l'aide de telles attaques, un attaquant peut altérer l'intégrité des instructions machines ou des données pour, par exemple, retrouver une clé secrète d'un système cryptographique, contourner des mécanismes de sécurité tels que la vérification d'un code PIN lors d'une authentification ou simplement empêcher l'exécution d'une fonction essentielle pour la sécurité d'un système critique.

Ces attaques peuvent provoquer notamment trois types de fautes, dites fautes d'exécution, lors de l'exécution du code binaire :
1) une altération des instructions du code machine exécuté,
2) une altération des données stockées dans la mémoire principale ou dans des registres du microprocesseur, et
3) une altération du flot de contrôle du code machine.

Le flot de contrôle correspond au chemin d'exécution suivi lors de l'exécution du code machine. Le flot de contrôle est classiquement représenté sous la forme d'un graphe connu sous le terme de graphe de flot de contrôle ou « control flow graph » en anglais.

Pour détecter de telles fautes d'exécution, il a déjà été proposé d'associer un code d'intégrité à chaque donnée traitée par le microprocesseur. Ensuite, le code d'intégrité associé au résultat de l'instruction qui traite ces données est calculé à partir des codes d'intégrités des données traitées. Ainsi, si une faute se produit lors de l'exécution de cette instruction, le résultat obtenu ne correspond pas au code d'intégrité calculé. Cela permet de détecter cette faute.

Le code d'intégrité est construit à partir de la donnée et, en plus, à l'aide d'une clé secrète connue seulement du microprocesseur. Ainsi, il est difficile pour un attaquant de modifier un code d'intégrité pour qu'il corresponde à un résultat fauté puisqu'il ne connaît pas la clé secrète. Il faut cependant qu'il soit toujours possible de construire le code d'intégrité du résultat en utilisant les codes d'intégrité associés aux données traitées et sans utiliser le résultat de l'instruction exécutée par l'unité arithmétique et logique. Par exemple, une telle solution est décrite dans la demande EP4089559. Les circuits matériels décrits dans cette demande EP4089559 pour calculer le code d'intégrité correspondant à une opération arithmétique et logique particulière sont simples et rapides car la fonction Q_{α} utilisée pour calculer le code d'intégrité utilise pour cela des permutations conditionnelles. Plus précisément, la fonction Q_{α} utilise des permutations paramétrées par une clé secrète α. Ainsi, grâce à l'utilisation de cette fonction Q_{α} , le calcul des codes d'intégrité est rapide de sorte que cela ne ralentit pas ou très peu l'exécution du code machine par le microporcesseur.

Toutefois, la clé secrète α utilisée par la fonction Q_{α} peut être assez facilement déterminée à partir du moment où l'on connaît plusieurs paires (Dᵢ, Q_{α}(Dᵢ)), où Dᵢ est une donnée et Q_{α}(Dᵢ) est le code d'intégrité calculé pour la donnée Dᵢ en utilisant la fonction Q_{α}. Cela constitue donc une faiblesse du microprocesseur qui implémente cette fonction Q_{α} et qui peut être mise à profit pour compromettre la sécurité du microprocesseur.

De l'état de l'art est également connu de EP2490148B1 et de l'article suivant : Wali I ET AI : « A hybrid Fault-Tolerant Architecture for Highly Reliable Processing Cores », Journal of Electronic Testing, Kluwer Academic Publishers, Dordrecht, NL, vol. 32, N°2, mars 2016, pages 147-161.

L'objectif est de proposer un microprocesseur dont la sécurité peut être améliorée tout en utilisant des circuits matériels pour calculer le code d'intégrité aussi simples et rapides que ceux divulgués dans la demande EP4089559.

L'invention est exposée dans le jeu de revendications joint.

L'invention sera mieux comprise à la lecture de la description qui va suivre, donnée uniquement à titre d'exemple non limitatif et faite en se référant aux dessins sur lesquels :
- la figure 1 est une illustration schématique de l'architecture d'un calculateur électronique apte à exécuter un code binaire,
- la figure 2 est une illustration schématique de la structure d'un module matériel de sécurisation utilisé dans le calculateur de la figure 1,
- la figure 3 est un organigramme d'un procédé d'exécution du code binaire par le calculateur de la figure 1.

Dans cette description, la terminologie, les conventions et les définitions des termes utilisés dans ce texte sont introduites dans un chapitre I. Ensuite, des exemples détaillés de modes de réalisation sont décrits dans un chapitre Il en référence aux figures. Dans un chapitre III, des variantes de ces modes de réalisation sont présentées. Enfin, les avantages des différents modes de réalisation sont précisés dans un chapitre IV.

### Chapitre I : Définitions, terminologies et conventions :

Dans les figures, les mêmes références sont utilisées pour désigner les mêmes éléments.

Dans la suite de cette description, les caractéristiques et fonctions bien connues de l'homme du métier ne sont pas décrites en détails.

Un « programme » désigne un ensemble d'une ou de plusieurs fonctions prédéterminées que l'on souhaite faire exécuter par un microprocesseur.

Une « instruction » désigne une instruction machine exécutable par un microprocesseur. Une telle instruction est constituée :
- d'un opcode, ou code d'opération, codant la nature de l'opération à exécuter, et
- d'un ou plusieurs opérandes définissant la ou les valeurs des paramètres de cette opération.

Les registres dans lesquels sont enregistrées la ou les données à traiter par une instruction sont typiquement identifiés par un ou plusieurs opérandes de l'instruction. De même, le registre dans lequel le résultat de l'exécution d'une instruction doit être enregistré peut aussi être identifié par un opérande de cette instruction.

Par « instruction logique », on désigne une instruction du jeu d'instructions du microprocesseur qui, lorsqu'elle est exécutée par l'unité arithmétique et logique, enregistre dans un registre Rᵣₑₛ₋ₚ du microprocesseur le résultat d'une opération booléenne. L'opcode de l'instruction logique identifie l'opération booléenne à exécuter par l'unité arithmétique et logique pour modifier ou combiner la ou les données D₁ à Dₙ. Par la suite, le symbole "&" est utilisé pour désigner de façon générique une opération booléenne. Ainsi, la notation D₁&D₂&...&Dₙ désigne de façon générique une opération booléenne exécutée par le microprocesseur 2 entre les données D₁ à Dₙ. Dans le cas où n = 1, l'opération booléenne est l'opération complément également connue sous le nom d'opération booléenne "NON". Dans le cas où n est supérieur ou égal à deux, l'opération booléenne est choisie dans le groupe constitué des opérations booléennes suivantes et de leur composition :
- l'opération logique « OU »,
- l'opération logique « OU EXCLUSIF»,
- l'opération logique « ET ».

Par « instruction arithmétique », on désigne une instruction du jeu d'instructions du microprocesseur qui, lorsqu'elle est exécutée par l'unité arithmétique et logique, enregistre dans un registre Rᵣₑₛ₋ₚ du microprocesseur le résultat d'une opération arithmétique. Une opération arithmétique est différente d'une opération booléenne. Typiquement, une opération arithmétique appartient au groupe composé des opérations de décalage de bits, des opérations de rotation de bits, des opérations d'addition, des opérations de multiplication et des opérations de division.

Par "Instruction arithmétique et logique", on désigne aussi bien une instruction logique qu'une instruction arithmétique et le symbole "*" est utilisé pour désigner de façon générique l'opération booléenne ou arithmétique correspondante. Par la suite, sauf indication contraire, le terme "instruction" désigne une instruction arithmétique et logique.

Un « code machine » est un ensemble d'instructions machines. Il s'agit typiquement d'un fichier contenant une succession de bits portant la valeur « 0 » ou « 1 », ces bits codant les instructions à exécuter par le microprocesseur. Le code machine est directement exécutable par le microprocesseur, c'est-à-dire sans nécessiter une compilation ou une interprétation préalable.

Un « code binaire » est un fichier contenant une succession de bits portant la valeur « 0 » ou « 1 ». Ces bits codent des données et des instructions à exécuter par le microprocesseur. Ainsi, le code binaire comprend au moins un code machine et en plus, généralement, des données numériques traitées par ce code machine.

On parle d'exécution d'une fonction pour désigner l'exécution des instructions réalisant cette fonction.

La taille d'une données est égale au nombre de bits contenus dans cette donnée.

### Chapitre II : Exemple de mode de réalisation

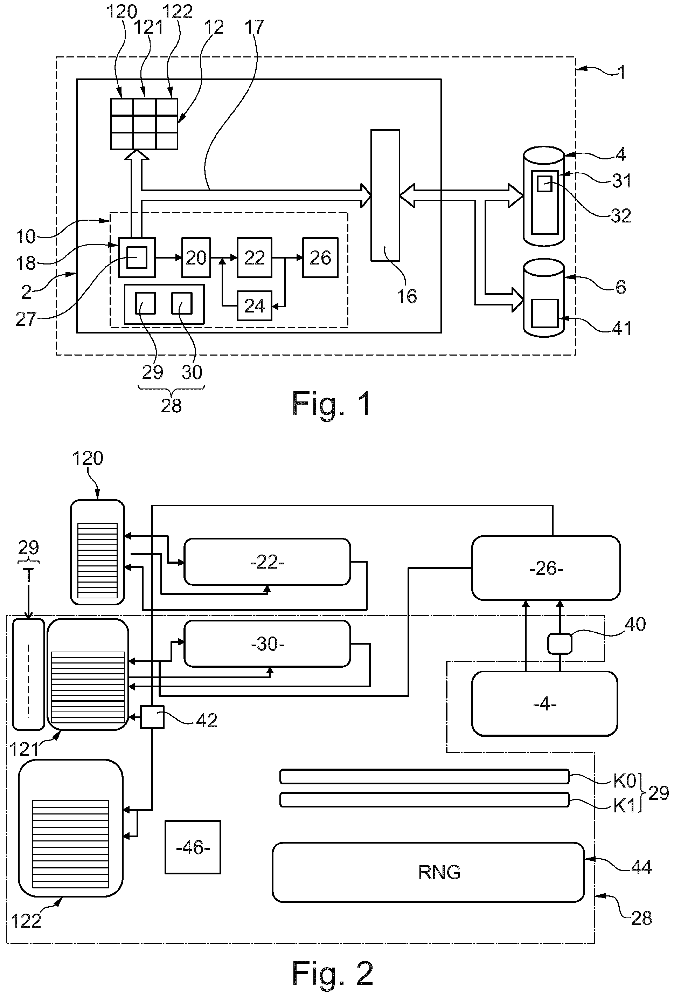

La figure 1 représente un calculateur électronique 1 comportant un microprocesseur 2, une mémoire principale 4 et un support 6 de stockage de masse. Par exemple, le calculateur 1 est un ordinateur, un smartphone, une tablette électronique, une carte à puce ou similaire.

Le microprocesseur 2 comporte ici :
- une chaîne matérielle 10 de traitement des instructions à exécuter,
- un ensemble 12 de registres,
- une interface 16 d'entrée/sortie de données, et
- un bus 17 qui relie les différents composants du microprocesseur 2 entre eux.

La mémoire 4 est configurée pour stocker des instructions d'un code binaire 31 d'un programme devant être exécuté par le microprocesseur 2. La mémoire 4 est une mémoire à accès aléatoire. Typiquement, la mémoire 4 est une mémoire volatile. La mémoire 4 peut être une mémoire externe au microprocesseur 2 comme représenté sur la figure 1. Dans ce cas, la mémoire 4 est, par exemple, réalisée sur un substrat mécaniquement séparé du substrat sur lequel sont réalisés les différents éléments du microprocesseur 2 comme la chaîne 10.

A titre d'illustration, le code binaire 31 comporte notamment un code machine 32 d'une fonction sécurisée. Chaque fonction sécurisée correspond à un ensemble de plusieurs lignes de code, par exemple plusieurs centaines ou milliers de lignes de code, enregistrées à des adresses successives dans la mémoire 4. Ici, chaque ligne de code correspond à un mot-machine. Ainsi, une ligne de code est chargée dans un registre du microprocesseur 2 en une seule opération de lecture. De même, une ligne de code est écrite dans la mémoire 4 par le microprocesseur 2 en une seule opération d'écriture. Chaque ligne de code code soit une seule instruction soit une seule donnée.

Le support 6 est typiquement une mémoire non volatile. Par exemple, il s'agit d'une mémoire du type EEPROM ou Flash. Il contient ici une copie 41 de sauvegarde du code binaire 31. Typiquement, c'est cette copie 41 qui est automatiquement recopiée dans la mémoire 4 pour restaurer le code 31, par exemple, après une coupure de courant ou similaire ou juste avant que débute l'exécution du code 31.

A titre d'illustration, le microprocesseur 2 est conforme à l'architecture ARM (« Advanced Risk Machine ») version 7 et supporte les jeux d'instructions tels que Thumb1 et/ou Thumb2. Un jeu d'instructions définit de façon limitative la syntaxe des instructions que le microprocesseur 2 est capable d'exécuter. Ce jeu d'instructions définit donc notamment l'ensemble des opcodes possibles pour une instruction.

Dans cet exemple de réalisation, l'ensemble 12 comporte des registres généraux utilisables pour stocker tout type de données et des registres dédiés. Contrairement aux registres généraux, les registres dédiés sont dédiés au stockage de données particulières généralement automatiquement générées par le microprocesseur 2.

Dans ce mode de réalisation, l'ensemble 12 comporte un banc principal 120 de registres et deux bancs auxiliaires 121 et 122 de registres. Les bancs auxiliaires 121 et 122 sont identiques au banc principal 120.

Le banc 120 est utilisé pour stocker les données traitées et utilisées par la chaîne 10 de traitement. A cet effet, le banc 120 est configuré pour permettre simultanément la lecture de plusieurs données et l'écriture de plusieurs données. Pour cela, typiquement, le banc 120 comporte plusieurs ports d'adresse et plusieurs ports de lecture/écriture.

Typiquement, le banc 120 comporte 64 ou 32 registres ou moins et généralement plus de huit registres. La taille de chaque registre du banc 120 est égale à la taille des données traitées par l'unité arithmétique et logique du microprocesseur 2. La taille, en nombre de bits, de chaque donnée traitée est égale à 2^{d}, où d est un entier supérieur à deux. Par exemple, ici, la taille de chaque donnée est égale à 32 bits ou à 64 bits.

L'interface 16 est notamment apte à acquérir des données et des instructions, par exemple, depuis la mémoire 4 et/ou le support 6 extérieurs au microprocesseur 2.

La chaîne 10 est plus connue sous le terme anglais de "pipeline". La chaîne 10 permet de commencer à exécuter une instruction du code machine alors que le traitement, par la chaîne 10, de la précédente instruction de ce code machine n'est pas encore terminé. De telles chaînes de traitement sont bien connues et seuls les éléments de la chaîne 10 nécessaires à la compréhension de l'invention sont décrits plus en détail.

La chaîne 10 comporte typiquement les étages suivants :
- un chargeur 18 d'instructions,
- un décodeur 20 d'instructions,
- une unité arithmétique et logique 22 qui exécute les instructions,
- une circuit 24 de ré-écriture,
- un module 26 d'accès mémoire, et
- un module matériel 28 de sécurisation.

Le chargeur 18 charge la prochaine instruction à exécuter par l'unité 22 à partir de la mémoire 4. Plus précisément, le chargeur 18 charge l'instruction du code machine 32 sur lequel pointe un compteur ordinal 27. Sauf si sa valeur est modifiée par l'exécution d'une instruction de branchement, la valeur du compteur ordinal 27 est incrémentée d'un pas régulier à chaque exécution d'une instruction par l'unité arithmétique et logique 22. Le pas régulier est égal à l'écart entre les adresses de deux instructions immédiatement consécutives dans le code machine 32.

Le décodeur 20 décode l'instruction chargée par le chargeur 18 pour obtenir des signaux de configuration qui configurent le microprocesseur 2 et, en particulier l'unité 22, pour qu'il exécute, typiquement lors du prochain cycle d'horloge, l'instruction chargée. Un de ces signaux de configuration code la nature de l'opération à exécuter par l'unité 22. Ce signal de configuration est issu de ou est construit à partir de l'opcode de l'instruction chargée. D'autres signaux de configuration indiquent, par exemple, si l'instruction est une instruction de chargement d'une donnée depuis la mémoire 4 ou d'écriture d'une donnée dans la mémoire 4. Ces signaux de configuration sont transmis à l'unité 22. D'autres signaux de configuration comportent les valeurs des opérandes chargées. Selon l'instruction à exécuter, ces signaux sont transmis à l'ensemble 12 de registres ou à l'unité 22.

L'unité 22 exécute les unes après les autres les instructions décodées.

Le circuit 24 de ré-écriture est capable d'enregistrer le résultat de l'exécution d'une instruction par l'unité 22 dans un ou plusieurs des registres de l'ensemble 12 de registres.

Le module 26 d'accès mémoire est capable, par l'intermédiaire de l'interface 16, de charger les données à traiter par l'unité 22 dans l'ensemble 12 de registres ainsi que de sauvegarder des données enregistrées dans l'ensemble 12 dans la mémoire 4.

Le module 28 est capable d'exécuter automatiquement les différentes opérations nécessaires pour sécuriser l'exécution des instructions arithmétique et logique par l'unité 22. Le module 28 fonctionne indépendamment et sans utiliser l'unité 22. Ainsi, il est capable de travailler en parallèle de l'unité 22. A cet effet, il comporte notamment une mémoire non-volatile sécurisée 29 et une unité 30 de calcul. Aucun accès à cette mémoire 29 sans passer par l'intermédiaire du module 28 n'est prévu. Dans ce mode de réalisation, le module 28 est configuré pour exécuter des opérations telles que les opérations suivantes :
- vérifier un code d'intégrité,
- construire un code d'intégrité Cᵢ à partir d'une donnée Dᵢ,
- construire le code d'intégrité Cᵣₑₛ₋ₜ d'un résultat Dᵣₑₛ₋ₚ à partir de codes d'intégrités C_{1,α} à C_{n,α} des données traitées.

Pour réaliser cette dernière opération, l'unité 30 comporte plusieurs circuits matériels de calcul. Chacun de ces circuits matériels de calcul construit un code Cᵣₑₛ₋ₜ d'intégrité du résultat Dᵣₑₛ₋ₚ à partir des codes d'intégrités C_{1,α} à C_{n,α} des données D₁ à Dₙ traitées par l'unité 22 et sans utiliser directement le résultat Dᵣₑₛ₋ₚ produit par l'unité 22. Ici, il existe un circuit matériel de calcul pour les instructions logiques et un circuit matériel de calcul pour chaque instruction arithmétique dont l'exécution doit être sécurisée. Ici, ces circuits matériels de calcul sont les mêmes que ceux décrits dans la demande EP4089559. Leur description n'est donc pas reprise ici.

L'unité 30 travaille en parallèle de l'unité 22. Elle peut être vue comme une autre unité arithmétique et logique mais spécialisées dans le calcul des codes Cᵣₑₛ₋ₜ.

La mémoire 29 est utilisée pour stocker les informations secrètes nécessaires au fonctionnement du module 28. Ici, elle comporte donc notamment les clés secrètes αₖ utilisées par le module 28 pour sécuriser l'exécution des instructions par l'unité 22.

La figure 2 représente plus en détail un mode de réalisation du module 28 de sécurisation. Dans la figure 2, les bancs 121 et 122 sont considérées comme faisant partie du module 28.

Le module 28 comporte, en plus de l'unité 30, notamment des circuits matériels 40 et 42 de permutation conditionnelle, un générateur 44 de clés et un compteur 46.

Le circuit matériel 40 de permutation conditionnelle est capable de calculer le code C_{i,α} d'intégrité d'une donnée Dᵢ chargée dans le banc 120 par le module 26 d'accès mémoire. Pour cela, le circuit 40 implémente la relation suivante : Cᵢ = Q_{α}(Dᵢ), où :
- l'indice i identifie la donnée Dᵢ, et
- la fonction Q_{α} est une fonction préprogrammée dans le module 28 et paramétrée par la clé secrète α.

La fonction Q_{α} est la fonction décrite en détail dans la demande EP4089559. Ici, il est simplement rappelé que la fonction Q_{α} est définie par la relation suivante : Q_{α}(Dᵢ) = P o F_{α}(Dᵢ), où P est une fonction prédéterminée et F_{α} est une fonction définie par la relation suivante : F_{α}(Dᵢ)= E₀ o... o E_{q} o ... o E_{NbE-1}(Dᵢ), où chaque fonction E_{q} est un étage de transpositions et l'indice q est un numéro d'ordre compris entre zéro à NbE-1, où NbE est un nombre entier supérieur à un et inférieur ou égal à d. Chaque étage E_{q} de transpositions est défini par la relation suivante : E_{q}(x) = T_{αm,q} o... o T_{αj,q} o ... o T_{α1,q} o T_{α0,q}(x), où :
- x est une variable dont la taille, en nombre de bits, est égale à la taille de la donnée Dᵢ,
- T_{αj,q} est une transposition conditionnelle, paramétrée par le paramètre α_{j,q},
- "m+1" est le nombre total de transpositions T_{αj,q} de l'étage E_{q},
- "j" est un numéro d'ordre identifiant la transposition T_{αj,q} parmi les autres transpositions de l'étage E_{q}, et
- le symbole "o" désigne l'opération de composition de fonctions.

Par exemple, ici, la fonction P est la fonction identitée.

Chaque transposition conditionnelle T_{αj,q} permute deux blocs de bits B_{2j+1,q} et B_{2j,q} de la variable x lorsque le paramètre α_{j,q} est égal à une première valeur, par exemple un, et qui ne permute pas ces deux blocs de bits lorsque le paramètre α_{j,q} est égal à une seconde valeur, par exemple zéro. La transposition T_{αj,q} se distingue de toutes les autres transpositions de la fonction F_{α} par le fait que c'est la seule qui permute les deux blocs B_{2j+1,q} et B_{2j,q} lorsque le paramètre α_{j,q} est égal à la première valeur. Les blocs B_{2j+1,q} et B_{2j,q} de toutes les transpositions T_{αj,q} de l'étage E_{q} sont différents les uns des autres et ne se chevauchent pas de sorte que toutes les transpositions T_{αj,q} de l'étage E_{q} peuvent être exécutées en parallèles.

Pour tous les étages E_{q} pour lesquels q est inférieur à NbE-1 et pour toutes les transpositions T_{αj,q} de cet étage, les blocs B_{2j+1,q} et B_{2j,q} sont situés à l'intérieur d'un même bloc de taille supérieure permuté par une transposition de l'étage supérieur E_{q+1} lorsque le paramètre de cette transposition de l'étage supérieur E_{q+1} est égal à la première valeur.

La concaténation des bits de tous les paramètres α_{j,q} de tous les étages E_{q} est égale à la valeur de la clé secrète α.

Le circuit matériel 42 de permutation conditionnelle est capable de calculer le code Cᵢ d'intégrité d'une donnée Dᵢ écrite dans le banc 120 par le circuit 24 de ré-écriture. Pour cela, le circuit 42 est structurellement identique au circuit 40.

Le générateur 44 génère des clés α destinées à être utilisées par l'unité 30 et les circuits 40, 42 de permutation conditionnelle. Par exemple, le générateur 44 est un générateur aléatoire ou pseudo-aléatoire de nombres.

Le compteur 46 permet de compter un nombre prédéterminé N_{c} de cycles d'horloge du microprocesseur 2. Lors d'un cycle d'horloge, l'unité 22 exécute au plus une instruction. Le nombre N_{c} est choisi supérieur ou égal à un nombre Nₘᵢₙ. Le nombre Nₘᵢₙ est égal au nombre minimum de cycles d'horloge nécessaires pour être sûr que l'exécution de toutes les instructions en cours d'exécution par le microprocesseur 2 à l'instant où le compteur 46 commence à compter les cycles d'horloge, soit terminée à la fin des Nₘᵢₙ cycles d'horloge comptés. A l'inverse, ici, le nombre N_{c} est aussi choisi proche de Nₘᵢₙ. Par exemple, le nombre N_{c} est inférieur à 10Nₘᵢₙ ou à 5Nₘᵢₙ et, de préférence, inférieur à 2Nₘᵢₙ. Pour cela, dans la majorité des cas, le nombre N_{c} est choisi entre 5 et 500 ou entre 5 et 300.

La mémoire 29 comporte en particulier :
- un registre K0 destiné à contenir une première clé secrète,
- un registre K1 destiné à contenir une seconde clé secrète différente de la première clé secrète, et
- un registre T destiné à marquer les registres des bancs 121 et 122 qui ont été mis à jour.

La taille du registre T est égale au nombre de registres contenus dans chacun des bancs 121 et 122.

Par la suite, le registre du banc 120 qui contient la donnée Dᵢ est noté R_{i,0}. Les registres des bancs 121 et 122 qui contiennent chacun un code d'intégrité associé à la donnée Dᵢ sont notés, respectivement, R_{i,1} et R_{i,2}. Le bit du registre T qui indique si les registres R_{i,1} et R_{i,2} ont été mis à jour est noté Tᵢ.

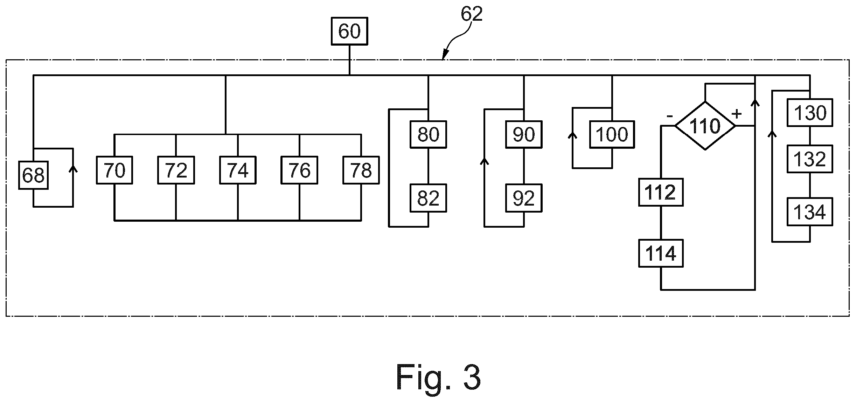

Le fonctionnement du microprocesseur 2 pour sécuriser l'exécution d'instructions arithmétique et logique va maintenant être décrit plus en détail en référence à la figure 3.

Le procédé débute par une phase 60 d'initialisation. Lors de la phase 60, le code binaire 31est chargé dans la mémoire 4 à partir du support 6. Tous les registres des bancs 120, 121 et 122 sont initialisés à zéro. Tous les bits Tᵢ du registre T sont également initialisés à zéro. Enfin, le générateur 44 génère deux clés secrètes α1 et α2 et les enregistre dans les registres, respectivement, K0 et K1. Le registre K0 est marqué comme étant celui qui contient la clé secrète courante et le banc 121 est marqué comme étant le banc auxiliaire courant. Par la suite, le registre K0 ou K1 qui est marqué comme étant celui qui contient la clé secrète courante est appelé « registre K0 ou K1 courant ». Le registre K0 ou K1 qui n'est pas marqué comme étant celui qui contient la clé secrète courante est appelé « registre K0 ou K1 non-courant ». De façon similaire, le banc auxiliaire qui n'est pas marqué comme étant le banc auxiliaire courant est appelé « banc auxiliaire non-courant ».

Ensuite, une phase 62 d'exécution du code binaire 31par le microprocesseur 2 débute.

Au début de la phase 62, lors d'une étape 68, le compteur 46 est déclenché. Le compteur 46 s'incrémente automatiquement de un au début de chaque cycle d'horloge.

Lors de la phase 62, les instructions du code machine sont chargées les unes après les autres par le chargeur 18 puis exécutées.

Plus précisément, pour chacune de ces instructions, lors d'une étape 70, le chargeur 18 charge l'instruction à exécuter.

Ensuite, lors d'une étape 72, l'instruction chargée est décodée par le décodeur 20.

Puis, lors d'une étape 74, l'instruction décodée est exécutée par l'unité 22. Si l'instruction exécutée est une instruction arithmétique et logique cela provoque la réalisation d'une opération arithmétique ou logique qui s'écrit sous la forme générale D₁*D₂*...*Dₙ est l'obtention du résultat Dᵣₑₛ₋ₚ de cette opération. Dans l'opération D₁*D₂*... *Dₙ :
- l'indice n est égal au nombre de données Dᵢ traitées par l'instruction arithmétique et logique, l'indice n étant supérieur ou égal à un,
- D₁ à Dₙ sont des données enregistrées, respectivement, dans des registres R_{1,0} à R_{n,0} du banc principal 120,
- les registres R_{1,0} à R_{n,0} sont les registres désignés par les opérandes de l'instruction arithmétique et logique,
- le symbole « * » est l'opération arithmétique ou logique désignée par l'opcode de l'instruction arithmétique et logique.

Ici, le banc 120 contient uniquement les données Dᵢ à traiter et aucun des codes d'intégrités C_{i,αk} de ces données.

Lors d'une étape 76, le circuit 24 de ré-écrite écrit le résultat Dᵣₑₛ₋ₚ délivré par l'unité 22 suite à l'exécution d'une instruction arithmétique et logique dans un registre R_{res-p,0} du banc 120.

Lors d'une étape 78, le module 26 charge, dans le banc 120 les données Dᵢ à traiter par l'unité 22 avant que l'unité 22 commence le traitement de ces données Dᵢ. Le chargement d'une donnée Di dans le banc 120 est typiquement déclenché par l'exécution d'une instruction de chargement par l'unité 22. A l'inverse, lors de l'étape 78, le module 26 peut aussi déclencher le transfert d'une donnée Dᵢ enregistrée dans le banc 120 vers la mémoire 4. Une telle transfert est généralement également déclenché par l'exécution d'une instruction d'écriture par l'unité 22. Généralement, pour optimiser les transfert de données entre la mémoire 4 et le microprocesseur 2, des mémoires caches sont utilisées. L'utilisation de mémoires caches étant classique, ceci n'est pas décrit ici en détail.

Chacune des étapes 70 à 78 peut être exécutées en parallèle des autres ce qui permet notamment de commencer à exécuter une instruction avant la fin de l'exécution du ou des instructions précédentes.

En parallèle des étapes 70 à 78, le module 28 sécurise le fonctionnement du microprocesseur 2 contre, notamment, les attaques par injection de fautes. Pour cela, comme expliqué ci-dessous, le module 28 change fréquemment la clé secrète courante. Ainsi, le module 28 utilise successivement les clés α1, α2, α3, ..., αk, où k désigne le numéro d'ordre de la clé secrète dans la succession de clés secrètes utilisées. Par la suite, αk désigne la clé courante et αk+1 désigne la prochaine clé courante.

A chaque fois qu'une instruction de chargement d'une donnée Dᵢ dans un registre R_{i,0} du banc 120 est exécutée par le microprocesseur 2, lors d'une étape 80, le circuit 40 calcule le code C_{i,αk} à l'aide d'une relation C_{i,αk} = O_{αk}(Dᵢ). La fonction Q_{αk} est la fonction Q_{α}, précédemment décrite, paramétrée par la clé secrète courante αk. Lors de la première itération de l'étape 80, la clé secrète courante est la clé α1 enregistrée dans le registre K0.

Ensuite, lors d'une étape 82, le code C_{i,αk} est enregistré dans le registre correspondant du banc auxiliaire courant. Ainsi, lors de la première exécution de l'étape 82, le code C_{i,α1} est enregistré dans le registre R_{i,1} du banc 121. Par exemple, pour cela, le code C_{i,αk} calculé est fourni au module 26 en même temps que la donnée Dᵢ et le module 26 enregistre la donnée Dᵢ dans le registre R_{i,0} du banc 120 et, en parallèle, le code C_{i,αk} dans le registre correspondant du banc auxiliaire courant.

En parallèle de l'exécution, par l'unité 22 de l'instruction qui provoque la réalisation de l'opération D₁*D₂*... *Dₙ et l'enregistrement du résultat Dᵣₑₛ₋ₚ de cette opération dans le registre R_{res-p,0}, lors d'une étape 90, l'unité 30 calcule un code Cᵣₑₛ₋ₜ. Pour cela, l'unité utilise les codes C_{1,αk}, C_{2,αk} , ... , C_{n,αk} enregistrés dans le banc auxiliaire courant et la clé secrète courante αk. Lors de la première itération de l'étape 90, ce sont donc les codes C_{1,α1}, C_{2,α1}, ... , C_{n,α1} et la clé α1 qui sont utilisés. Le code Cᵣₑₛ₋ₜ est calculé sans utiliser le résultat Dᵣₑₛ₋ₚ.

Ensuite, lors d'une étape 92, l'unité 30 enregistre le code Cᵣₑₛ₋ₜ calculé dans le registre correspondant du banc auxiliaire courant en tant que code d'intégrité C_{res-p,αk} associé à la donnée Dᵣₑₛ₋ₚ. Lors de la première itération de l'étape 92, le code Cᵣₑₛ₋ₜ est donc enregistré en tant que code C_{res-p,α1} dans le registre R_{res-p,1} du banc 121.

Lors d'une étape 100, à chaque fois qu'une donnée Dᵢ est écrite dans un registre R_{i,0} du banc 120, le circuit 42 calcule le code C_{i,αk+1} à l'aide de la relation C_{i,αk+1} = Q_{αk+1}(Dᵢ). La fonction Q_{αk+1} est la fonction Q_{α}, précédemment décrite, paramétrée par la prochaine clé secrète αk+1 enregistrée dans le registre K0 ou K1 non-courant. Le code C_{i,αk+1} est ensuite enregistré dans le registre correspondant du banc auxiliaire non-courant. Lors de la première itération de l'étape 100, le code C_{i,α2} est donc enregistré dans le registre R_{i,2} du banc 122.

L'étape 100 est exécutée à chaque fois que le module 26 charge une donnée Dᵢ dans le banc 120 et à chaque fois que le circuit 24 écrit un résultat D ᵣₑₛ₋ₚ dans le banc 120.

Lors de l'étape 100, le module 28 marque aussi que le registre, dans lequel le code C_{i,αk+1} a été enregistré, comme ayant été mis à jour. Pour cela, ici, le bit Tᵢ du registre T est mis à un.

En parallèle des étapes précédentes, lors d'une étape 110, le module 28 détecte des fautes d'exécution de l'unité 22 et, ici, vérifie en plus l'intégrité des données enregistrées dans le banc 120.

Pour détecter une faute d'exécution de l'unité 22, lors de l'étape 110, le module 28 vérifie que le code Cᵣₑₛ₋ₜ calculé par l'unité 30 correspond à un code Cᵣₑₛ₋ₚ défini par la relation suivante Cᵣₑₛ₋ₚ = Q_{αk}(Dᵣₑₛ₋ₚ), où le résultat Dᵣₑₛ₋ₚ est celui enregistré dans le registre R_{res-p,0}. Lorsque le code Cᵣₑₛ₋ₜ calculé par le circuit matériel de l'unité 30 est égal, en absence de faute d'exécution, au code Cᵣₑₛ₋ₚ, alors il y a correspondance entre les codes Cᵣₑₛ₋ₜ et Cᵣₑₛ₋ₚ s'ils sont égaux. Dans ce cas, le code Cᵣₑₛ₋ₚ est calculé à partir de la donnée Dᵣₑₛ₋ₚ délivrée par l'unité 22 et en mettant en œuvre la relation Cᵣₑₛ₋ₚ = Q_{αk}(Dᵣₑₛ₋ₚ). Lorsque le code Cᵣₑₛ₋ₜ calculé par le circuit matériel de l'unité 30 est égal, en absence de faute d'exécution, au résultat Dᵣₑₛ₋ₚ, alors il y a correspondance entre les codes Cᵣₑₛ₋ₜ et Cᵣₑₛ₋ₚ si le code Cᵣₑₛ₋ₜ est égal au résultat Dᵣₑₛ₋ₚ.

S'il n'y a pas de correspondance entre les codes Cᵣₑₛ₋ₚ et Cᵣₑₛ₋ₜ, le module 28 déclenche l'exécution d'une étape 112 de signalement d'une faute d'exécution. Dans le cas contraire, aucun signalement d'une faute d'exécution n'est déclenché, c'est-à-dire que le signalement d'une faute d'exécution est inhibé.

L'exécution de l'étape 110 permet donc de détecter un dysfonctionnement de l'unité 22 car le code Cᵣₑₛ₋ₜ correspond au code Cᵣₑₛ₋ₚ seulement si l'unité 22 a correctement exécuté l'instruction arithmétique et logique.

L'étape 110 peut aussi être déclenchée pour vérifier l'intégrité d'une donnée enregistrée dans le banc 120. Dans ce cas, il est procédé comme décrit ci-dessus sauf que le module 28 utilise la donnée Dᵢ et le code d'intégrité correspondant enregistré dans le banc auxiliaire courant.

L'étape 110 peut être déclenchée :
- à chaque fois qu'un résultat Dᵣₑₛ₋ₚ est obtenu par l'unité 22, et/ou
- à chaque fois qu'une instruction arithmétique et logique est sur le point d'être exécutée par l'unité 22, juste avant son exécution, pour vérifier l'intégrité des données Dᵢ contenues dans les registres R_{i,0} identifiés par les opérandes de l'instruction à exécuter, et/ou
- à chaque fois qu'une donnée du banc 120 est transférée vers la mémoire 4.

Lors de l'étape 112, le module 28 déclenche le signalement d'une faute d'exécution.

En réponse à un signalement d'une faute d'exécution, lors d'une étape 114, le microprocesseur 2 met en œuvre une ou plusieurs contre-mesures. De très nombreuses contre-mesures sont possibles. Les contre-mesures mises en œuvre peuvent avoir des degrés de sévérité très différents. Par exemple, les contre-mesures mises en œuvre peuvent aller d'un simple affichage ou une simple mémorisation d'un message d'erreur sans interrompre l'exécution normale du code machine 32 jusqu'à une mise hors service définitive du microprocesseur 2. Le microprocesseur 2 est considéré comme étant hors service lorsqu'il est définitivement placé dans un état où il est incapable d'exécuter un quelconque code machine. Entre ces degrés de sévérité extrêmes, il existe de nombreuses autres contre-mesures possibles telles que :
- l'indication par l'intermédiaire d'une interface homme-machine de la détection des fautes,
- l'interruption immédiate de l'exécution du code machine 32 et/ou sa réinitialisation, et
- la suppression du code machine 32 de la mémoire 4 et/ou la suppression de la copie 41 de sauvegarde et/ou la suppression des données secrètes.

Au fur et à mesure de l'exécution du code machine 32, tous les bits Tᵢ du registre T sont mis à un. Cela suppose que le code machine 32 utilise tous les registres du banc 120. Ceci est généralement le cas. De plus, dans le cas particulier d'un code machine qui n'utiliserait pas tous les registres du banc 120, il est toujours possibles d'ajouter à un tel code machine des instructions supplémentaires qui utilisent les registres qui, en absence de ces instructions supplémentaires, n'étaient pas utilisés.

Lors d'une étape 130, le module 28 déclenche le remplacement de la clé αk par la clé αk+1 dès que les deux conditions suivantes sont simultanément satisfaites :
- Condition 1) : Tous les bits Tᵢ du registre T sont égaux à un, et
- Condition 2) : Le compteur 46 a fini de compter N_{c} cycles d'horloge.

La condition 1) indique que tous les registres du banc auxiliaire non-courant, ont été marqués comme ayant été mis à jour. Lors de la première itération, le banc auxiliaire non-courant est le banc 122.

La condition 2) est satisfaite dès que la valeur du compteur 46 est supérieure au nombre Nc.

L'instant auquel le module 28 déclenche le remplacement de la clé secrète αk par la clé secrète αk+1 est noté « trₖ» par la suite.

Lors de l'étape 130, le module 28 change la clé courante et le banc auxiliaire courant. Pour changer la clé courante, le module 28 sélectionne le registre K0 ou K1 non-courant puis marque ce registre sélectionné comme étant celui qui contient, à partir de maintenant, la clé courante. Ainsi, à partir de maintenant, la clé αk+1 devient la nouvelle clé courante αk et la précédente clé courante est notée αk-1. Le module 28 sélectionne aussi le banc auxiliaire non-courant et le marque comme étant le nouveau banc auxiliaire courant. L'ancien banc auxiliaire courant devient le nouveau banc auxiliaire non-courant. Ainsi, celui des deux bancs auxiliaires 121 et 122 qui était le banc auxiliaire courant avant l'instant trₖ devient le banc auxiliaire non-courant après l'instant trₖ et vice versa.

Après la première itération de l'étape 130, la clé courante est maintenant celle contenue dans le registre K1, c'est-à-dire la clé α2, et le banc auxiliaire courant est le banc 122. Dès lors, pour toute nouvelle instruction dont l'exécution débute après cet instant tr₁, ce sont la clé secrète α2 et les codes C_{i,α2} qui sont utilisés lors de l'exécution des étapes 80, 82, 90, 92, 100 et 110.

Lors de l'étape 130, le module 28 ré-initialise le compteur 46 pour déclencher à nouveau le comptage de N_{c} cycles d'horloge.

A l'instant trₖ, pour toute les instructions arithmétique et logique en cours d'exécution dans la chaîne 10 de traitement, l'unité 30 est en train de calculer le ou les codes Cᵣₑₛ₋ₜ en utilisant les codes C_{1,αk-1}, C_{2,αk-1}, ... , C_{n,αk-1} et la précédente clé courante αk-1. Une instruction arithmétique et logique en cours d'exécution à l'instant trₖ est une instruction dont l'exécution a commencé avant l'instant trₖ et dont l'exécution n'est pas encore terminée à l'instant trₖ. Ainsi, pour ces instructions en cours d'exécution, même après l'instant trₖ, il est préférable de conserver les codes C_{1,αk-1}, C_{2,αk-1}, ... , C_{n,αk-1} et la précédente clé courante αk-1 disponibles pour ne pas fausser les calculs en cours d'un ou plusieurs codes Cᵣₑₛ₋ₜ. En effet, pour les instructions en cours d'exécution, les circuits matériels de l'unité 30 ont été configurés avant l'instant trₖ et cette configuration n'est pas modifiée après l'instant trₖ. Ainsi, après l'instant trₖ, les circuits matériels de calcul de l'unité 30 continuent, pour tous les calculs de code Cᵣₑₛ₋ₜ en cours à l'instant trₖ, à utiliser le précédent banc auxiliaire courant et la précédente clé courante αk-1, c'est-à-dire le banc courant et la clé courante tels qu'ils étaient avant l'instant trₖ. Dès lors, si le contenu du précédent banc auxiliaire courant ou si la précédente clé courante sont immédiatement modifiés après l'instant trₖ, cela peut fausser les calculs des codes Cᵣₑₛ₋ₜ en cours à l'instant trₖ et donc, en fin de compte, déclencher des signalements intempestifs de fautes d'exécution alors qu'il n'y a eu aucune faute lors de l'exécution de l'instruction arithmétique et logique par l'unité 22.

De même si une vérification d'un code Cᵣₑₛ₋ₜ était en cours à l'instant trₖ, il est aussi préférable de conserver les codes C_{1,αk-1}, C_{2,αk-1}, ... , C_{n,αk-1} et la clé αk-1 disponibles pour ne pas déclencher des signalements intempestifs de fautes d'exécution.

Ici, pour éviter cela, après l'instant trₖ, lors d'une étape 132, le module 28 inhibe toute modification de la précédente clé courante αk-1 jusqu'à un instant tdₖ. Ainsi, pendant l'intervalle [trₖ ; tdₖ], le module 28 continue d'utiliser la clé secrète αk-1 et les codes C_{i,αk-1} pour finaliser les calculs en cours des codes Cᵣₑₛₜ₋ₜ et les vérifications en cours de codes Cᵣₑₛ₋ₜ. De plus, pendant l'intervalle [trₖ ; tdₖ], le module 28 inhibe toute modification du registre T. Ainsi, les bits Tᵢ restent inchangés même si un nouveau code C_{i,αk-1} est écrit dans le précédent banc auxiliaire courant.

Ici, l'instant tdₖ est égal à l'instant auquel le compteur 46 a fini de compter N_{c} cycles d'horloge. A l'instant tdₖ, l'exécution des instructions et des vérifications en cours d'exécution à l'instant trₖ est finie de sorte que l'unité 30 n'utilise plus la clé αk-1 et les codes C_{1,αk-1}.

A l'instant tdₖ, lors d'une étape 134, le générateur 44 génère une nouvelle clé αk+1 et l'enregistre dans le registre K0 ou K1 non-courant qui contient la précédente clé courante αk-1. Ainsi, à partir de l'instant tdₖ, la précédente clé courante αk-1 est remplacée par la prochaine clé courante αk+1. Lors de l'étape 134, le module 28 réinitialise également le registre T et met donc tous les bits Tᵢ à zéro. Ainsi, tout ce qui a été décrit précédemment se répète et, en particulier, le remplacement de la clé courante αk par une nouvelle clé courante αk+1 générée de façon aléatoire ou pseudo-aléatoire.

### Chapitre III : Variantes :

Le module de sécurisation peut comporter plus de deux bancs auxiliaires de registres. Par exemple, dans un mode de réalisation particulier, le module de sécurisation comporte en plus une troisième banc auxiliaire de registres et un troisième registre K2. Ce troisième banc auxiliaire peut être utilisé pour accélérer encore plus la fréquence de changement des clés αk. Ceci est illustré dans le cas particulier du remplacement de la clé α2 par la clé α3. Ici, la clé α3 est générée avant l'instant tr₁, et non pas à l'instant td₁, et enregistrée dans le registre K2. Ensuite, entre les instants tr₁ et tr₂, et sans attendre l'instant td₁, à chaque fois qu'une donnée Dᵢ est écrite dans un registre R_{i,0} du banc principal de registres, le module de sécurisation calcule puis enregistre dans le troisième banc auxiliaire de registres, le code C_{i,α3}. Ainsi, grâce à l'utilisation du troisième banc auxiliaire, il est possible de commencer à remplir ce troisième banc auxiliaire avec les codes C_{i,α3} sans attendre l'instant td₁, c'est-à-dire l'instant à partir duquel les codes C_{i,α1} contenus dans le banc auxiliaire 121 ne sont plus utilisés. Ensuite, à l'instant tr₂, pour toute nouvelle opération arithmétique exécutée, le module de sécurisation utilise les codes C_{i,α3} enregistrés dans le troisième banc auxiliaire pour calculer le code Cᵣₑₛₜ₋ₜ. A partir de l'instant tr₂, les codes contenus dans le banc auxiliaire 121 ne sont plus utilisés. Dès lors, il est possible de commencer à écrire les codes C_{i,α4} dans le banc auxiliaire 121 sans attendre l'instant td₂ et donc de réitérer le processus ci-dessus en utilisant le banc auxiliaire 121 à la place du troisième banc auxiliaire.

Dans une autre variante, plus de trois bancs auxiliaires de registres peuvent être utilisés.

D'autres modes de réalisation des bancs auxiliaires de registres sont possibles. En particulier, le microprocesseur peut comporter un seul ensemble de registres contenant Nᵣ registres. Chacun des registres de cet ensemble contient une première, une deuxième et une troisième plages de bits de même taille. Dans ce cas, la première, la deuxième et la troisième plages de bits correspondent aux registres, respectivement, R_{i,0}, R_{i,1} et R_{i,2} précédemment décrits. Dans ce cas, chaque banc de registres est implémenté dans le même ensemble de registre en partitionnant chaque registre de cet ensemble en trois plages distinctes de même taille. Dès lors les ports d'adresse sont communs aux trois bancs de registres. Par contre, les ports de données sont distincts. Plus précisément, le port de données de l'ensemble de registres est alors partitionné en trois ports de données correspondant, respectivement, au banc principal 120, au banc auxiliaire 121 et au banc auxiliaire 122.

Les bancs auxiliaires 121 et 122 ne sont pas nécessairement identiques au banc principal 120. Par exemple, si la taille des codes d'intégrité est inférieure à la taille des données traitées, la taille des registres des bancs 121 et 122 est alors inférieure à la taille des registres du banc 120.

Le marquage des registres des bancs 121 et 122 comme ayant été mis à jour peut être réalisé différemment. Par exemple, lors de l'étape 134, le registre T n'est pas réinitialisé. A la place, lors de la prochaine itération de l'étape 130, la condition 1) est remplacée par la condition 1bis) suivante : Tous les bits Tᵢ du registre T sont égaux à zéro. Ensuite, une fois que la condition 1bis) a été utilisée lors de l'étape 130, elle est automatiquement remplacée par la condition 1) et ainsi de suite. Dès lors, dans ce mode de réalisation, les conditions 1) et 1bis) sont utilisées en alternance. Dans une autre variante, au lieu d'utiliser un seul registre T commun aux bancs 121 et 122 pour faire cela, il est possible d'utiliser deux registres T1 et T2 associés, respectivement, aux bancs 121 et 122. Les registres T1 et T2 sont chacun identiques au registre T. Les registres T1 et T2 fonctionnent comme le registre T sauf que pour marquer qu'un registre du banc 121 a été mis à jour, c'est seulement le registre T1 qui est utilisé et pour marquer qu'un registre du banc 122 a été mis à jour c'est seulement le registre T2 qui est utilisé.

En variante, le code Cᵣₑₛ₋ₜ calculé par l'unité 30 est uniquement utilisé lors de d'une étape 110 de vérification déclenchée dès que le résultat Dᵣₑₛ₋ₚ et le code Cᵣₑₛₜ₋ₜ ont été calculés. Le code Cᵣₑₛₜ₋ₜ calculé par l'unité 30 n'est pas enregistré dans l'un des bancs auxiliaires. Dans ce cas, si aucune faute d'exécution n'est signalée lors de l'étape 110, le code Cᵣₑₛ₋ₜ enregistré dans les registres R_{res-t,1} et R_{est-t,2} sont calculés par le circuit 42 de permutation conditionnelle directement à partir du résultat Dᵣₑₛ₋ₚ enregistré dans le registre R_{res-t,0}. Ainsi, dans ce cas, les codes C_{rest-t,αk} et C_{rest-t,αk+1} sont calculés à l'aide des relations suivantes : C_{rest-t,αk} = Q_{αk}(Dᵣₑₛ₋ₚ) et C_{rest-t,αk+1} = Qαₖ₊₁(Dᵣₑₛ₋ₚ).

D'autres modes de génération d'une nouvelle clé secrète sont possibles. Par exemple, le module de sécurisation comporte une mémoire dans lequel sont préenregistrées un grand nombre de clés secrètes pré-générées. La génération d'une clé secrète consiste alors seulement à sélectionner dans cette mémoire, l'une des clés secrètes qui y est enregistrée.

Dans un autre mode de réalisation, la nouvelle clé secrète est générée avant l'instant trₖ ou tdₖ puis enregistrée dans une mémoire temporaire du module de sécurisation. Lorsque le nombre N_{c} de cycles d'horloge est écoulé, la clé secrète contenue dans cette mémoire temporaire est copiée dans le registre contenant la précédente clé courante pour remplacer cette précédente clé courante.

Dans un mode de réalisation simplifié, le fait de continuer à utiliser la précédente clé secrète αk-1 et les codes C_{i,αk-1} entre les instants trₖ et tdₖ est omis. Autrement dit, l'étape 132 est omise. Dans ce cas, le changement de clés peut provoquer des signalements intempestifs de fautes d'exécution. Toutefois, ces signalements intempestifs de fautes d'exécution n'est pas nécessairement bloquant si cela ne se produit pas fréquemment et ne peut donc pas être confondu avec une tentative d'attaque par injection de fautes. Pour cela, typiquement, dans ce mode de réalisation simplifié, la clé secrète est changée moins fréquemment.

Le nombre N_{c} peut être choisi supérieur à 300 ou 1000. Toutefois, plus la valeur du nombre N_{c} est élevée, plus cela ralentit la fréquence de changement des clés αk.

En variante, chaque donné Dᵢ traitée par le microprocesseur est une donnée masquée obtenue en réalisant l'opération suivante : Dᵢ = D_{i,c} XOR M, où :
- D_{i,c} est une donné en claire et non masquée,
- M est un masque, de même taille que la donnée D_{i,c}, et
- XOR désigne l'opération booléenne « OU EXCLUSIF ».
Le fait que la donnée Dᵢ soit une donnée masquée ne change rien à ce qui a été décrit précédemment car la fonction Q_{α} est une fonction homomorphe par rapport aux opérations booléennes et donc en particulier par rapport à l'opération « OU EXCLUSIF ».

Plusieurs des variantes décrites ci-dessus peuvent être combinées dans un même mode de réalisation.

### Chapitre IV : Avantages des modes de réalisation décrits :

Le fait de pré-calculer les codes C_{i,αk+1} avant le déclenchement du remplacement de la clé secrète αk par une nouvelle clé secrète αk+1 puis d'enregistrer les codes C_{i,αk+1} ainsi pré-calculés dans le banc auxiliaire non-courant permet de disposer immédiatement des codes C_{i,αk+1} nécessaires dès que le remplacement de la clé secrète αk par la nouvelle clé secrète αk+1 est déclenché. Cela permet de limiter le ralentissement de l'exécution du code machine causé par le remplacement de la clé secrète αk par la clé secrète αk+1 car il n'est pas nécessaire de suspendre l'exécution des nouvelles instructions par la chaîne 10 de traitement matériel pendant une durée nécessaire au calcul des différents codes C_{i,αk+1} puis au remplacement, dans le banc auxiliaire 121, de chaque code C_{i,αk} par le code C_{i,αk+1} correspondant. Dès lors le remplacement d'une clé par une autre peut être fait plus fréquemment sans que cela ralentisse substantiellement l'exécution du code machine par le microprocesseur. Il est donc possible de changer rapidement les clés αk, ce qui permet d'améliorer la sécurité du microprocesseur 2.

De plus, le déclenchement du remplacement de la clé αk par la clé αk+1 uniquement lorsque tous les registres du banc auxiliaire contenant les codes C_{i,αk+1} ont été mis à jour permet d'éviter des signalements intempestifs de fautes d'exécution. En effet, il peut arriver qu'une donnée Dᵢ soit utilisée pendant une période [tₖ₋₁, tₖ], puis inutilisé pendant la période suivante [tₖ ; tₖ₊₁] pour être à nouveau utilisée pendant la période [tₖ₊₁ ; tₖ₊₂]. Dans ce cas, le code C_{i,αk+1} est enregistré dans l'un des bancs auxiliaires pendant la période [tₖ₋₁, tₖ]. Si le déclenchement du remplacement de la clé αk par la clé αk+1 n'est pas conditionné au fait que tous les registres du banc auxiliaire contenant le code C_{i,αk+1} soient marqués comme ayant été mis à jour, pendant la période [tₖ ; tₖ₊₁], le code C_{i,αk+2} n'est pas calculé car la donnée Dᵢ n'est pas utilisée pendant cette période. Dès lors, au cours de la période suivante [tₖ₊₁ ; tₖ₊₂], lorsque la donnée Dᵢ est traitée par l'unité arithmétique et logique, le code Cᵣₑₛ₋ₜ ne peut pas être correctement calculé puisque le code C_{i,αk+2} n'existe pas dans les bancs auxiliaires de registres. En fin de compte, cela déclenche donc systématiquement le signalement d'une faute d'exécution lorsque le résultat Cᵣₑₛ₋ₜ est vérifié. En empêchant le passage à la période suivante tant que tous les registres des bancs auxiliaires de registres n'ont pas été marqué comme ayant été mis à jour, ce problème est évité.

Le fait de continuer à utiliser la précédente clé courante αk-1 et les codes C_{i,αk} -1 après l'instant trₖ pour toutes les opérations arithmétiques dont l'exécution a débuté avant l'instant trₖ permet d'éviter des signalements intempestifs de fautes d'exécution. De plus, ces signalements intempestifs de fautes d'exécution sont évités sans que pour cela il soit nécessaire d'intervenir sur la configuration et les registres internes de la chaîne matérielle de traitement. Ainsi, ces signalements intempestifs sont évités sans ralentir l'exécution du code machine.

Le fait d'enregistrer les codes C_{i,α+2} dans le banc auxiliaire non-courant à la place des codes C_{i,αk} qui y étaient précédemment enregistrés, permet de changer fréquemment de clé secrète tout en utilisant seulement deux bancs auxiliaires de registres. Cela permet donc de simplifier l'implémentation matérielle du module de sécurisation.

Le fait de choisir la durée de l'intervalle [trₖ ; tdₖ] compris entre 5 et 300 cycles d'horloge du microprocesseur permet d'accélérer la fréquence à laquelle les clés αk sont changées tout en limitant ou en éliminant les signalements intempestifs de fautes d'exécution provoqués par un changement de clés.

Le fait que le code Cᵣₑₛ₋ₜ calculé par l'unité 30 soit enregistré en tant que code C_{rest-t,,αk} dans le banc auxiliaire courant évite le calcul de ce code C_{rest-t,,αk} à partir du résultat Dᵣₑₛ₋ₚ. De plus, en procédant ainsi, le code Cᵣₑₛₜ₋ₜ peut être vérifié à d'autre moment que juste après calcul du résultat Dᵣₑₛ₋ₚ. Par exemple, le code Cᵣₑₛ₋ₜ peut être vérifié seulement au moment où la donnée Dᵢ correspondante est enregistrée dans une mémoire cache externe au microprocesseur.

## Revendications

1. Microprocesseur équipé d'une unité arithmétique et logique (22), d'un banc principal (120) de registres et d'un module matériel (28) de sécurisation, dans lequel :
a) l'unité arithmétique et logique (22) est apte à exécuter une instruction arithmétique et logique comportant un opcode et un ou plusieurs opérandes qui, lorsqu'elle est exécutée par l'unité arithmétique et logique du microprocesseur, provoque la réalisation d'une opération D₁*D₂*...*Dₙ et l'enregistrement du résultat de cette opération dans un registre R_{res-p,0} du banc principal de registres, où :
- l'indice n est égal au nombre de données Dᵢ traitées par l'instruction arithmétique et logique, l'indice n étant supérieur ou égal à un,
- D₁ à Dₙ sont des données enregistrées, respectivement, dans des registres R_{1,0} à R_{n,0} du banc principal de registres, la taille, en nombre de bits, de chacune de ces données Dᵢ étant égale à 2^{d}, où d est un entier supérieur à deux,
- les registres R_{1,0} à R_{n,0} sont les registres désignés par les opérandes de l'instruction arithmétique et logique,
- le symbole « * » est l'opération arithmétique ou logique désignée par l'opcode de l'instruction arithmétique et logique,
b) le module matériel de sécurisation est configuré pour exécuter les opérations suivantes :
1) à chaque fois qu'une instruction de chargement d'une donnée Dᵢ dans un registre R_{i,0} du banc principal de registres est exécutée par le microprocesseur :
- le calcul d'un code C_{i,α1} à l'aide d'une relation C_{i,α1} = Q_{α1}(Dᵢ), où la fonction Q_{α1} est une fonction préprogrammée paramétrée par une clé secrète courante α1 préenregistrée dans le module matériel de sécurisation et connue seulement du module matériel de sécurisation, et
- l'enregistrement du code C_{i,α1} calculé dans un registre R_{i,1}, correspondant au registre R_{i,0}, d'un premier banc auxiliaire de registres,
2) en parallèle de l'exécution, par l'unité arithmétique et logique, de l'instruction arithmétique et logique qui provoque la réalisation de l'opération D₁*D₂*...*Dₙ et l'enregistrement du résultat de cette opération dans le registre R_{res-p,0} du banc principal de registres, le calcul d'un code Cᵣₑₛ₋ₜ à l'aide des codes C_{1,α1}, C_{2,α1}, ... , C_{n,α1} enregistrés dans le premier banc auxiliaire de registres et sans utiliser le résultat Dᵣₑₛ₋ₚ, puis
3) la vérification que le code Cᵣₑₛ₋ₜ calculé correspond à un code Cᵣₑₛ₋ₚ obtenu à partir du résultat Dᵣₑₛ₋ₚ et le déclenchement du signalement d'une faute d'exécution si le code Cᵣₑₛ₋ₜ ne correspond pas au code Cᵣₑₛ₋ₚ et, dans le cas contraire, l'inhibition de ce signalement,
**caractérisé en ce que** le module matériel (28) de sécurisation est également configuré pour exécuter les opérations suivantes :
4) à chaque fois qu'une donnée Dᵢ est écrite dans un registre R_{i,0} du banc principal de registres et avant le déclenchement du remplacement de la clé secrète courante α1 par une nouvelle clé secrète α2:
- le calcul d'un code C_{i,α2} à l'aide d'une relation C_{i,α2} = Q_{α2}(Dᵢ) où la fonction Q_{α2} est la même fonction préprogrammée que la fonction Q_{α1} sauf que la clé secrète courante α1 est remplacée par la nouvelle clé secrète α2, puis
- l'enregistrement du code C_{i,α2} calculé dans un registre R_{i,2}, correspondant au registre R_{i,0}, d'un second banc auxiliaire de registres et le marquage de ce registre comme ayant été mis à jour,
5) uniquement lorsque tous les registres du second banc auxiliaire ont été marqués comme ayant été mis à jour, le déclenchement, à un instant tr₁, du remplacement de la clé secrète courante α1 par la nouvelle clé secrète α2 et, à partir de cet instant tr₁, pour toute nouvelle instruction arithmétique et logique dont l'exécution débute après cet instant tr₁, l'usage de la clé secrète α2 et des codes C_{i,α2} enregistrés dans le second banc auxiliaire de registres à la place, respectivement, de la clé secrète α1 et des codes C_{i,α1} enregistrés dans le premier banc auxiliaire de registres pour calculer et vérifier le code Cᵣₑₛₜ₋ₜ.

2. Microprocesseur selon la revendication 1, dans lequel le module matériel (28) de sécurisation est configuré pour, après l'instant tr₁, pour toute instruction arithmétique et logique dont l'exécution a débuté avant l'instant tr₁ et dont l'exécution n'est pas encore terminée à l'instant tr₁, continuer à utiliser la clé secrète α1 et les codes C_{i,α1} enregistrés dans le premier banc auxiliaire de registres pour finaliser le calcul du code Cᵣₑₛₜ₋ₜ et pour la vérification de ce code Cᵣₑₛ₋ₜ.

3. Microprocesseur selon la revendication 2, dans lequel le module matériel de sécurisation est configuré pour :
- entre l'instant tr₁ et un instant td₁, pour toute instruction arithmétique et logique dont l'exécution a débuté avant l'instant tr₁ et dont l'exécution n'est pas encore terminée à l'instant tr₁, continuer à utiliser la clé secrète α1 et les codes C_{i,α1} enregistrés dans le premier banc auxiliaire de registres pour finaliser le calcul du code Cᵣₑₛₜ₋ₜ et pour la vérification de ce code Cᵣₑₛ₋ₜ ,et
- à partir de l'instant td₁ :
- à chaque fois qu'une donnée Dᵢ est écrite dans un registre R_{i,0} du banc principal de registres et avant le déclenchement du remplacement de la clé secrète α2 par une nouvelle clé secrète α3:
- le calcul d'un code C_{i,α3} à l'aide d'une relation C_{i,α3} = Q_{α3}(Dᵢ) où la fonction Q_{α3} est la même fonction préprogrammée que la fonction Q_{α1} sauf que la clé secrète α1 est remplacée par la clé secrète α3, puis
- l'enregistrement du code C_{i,α3} calculé dans le registre R_{i,1}, correspondant au registre R_{i,0}, du premier banc auxiliaire de registres,
- en réponse au déclenchement, à un instant tr₂ postérieur à l'instant td₁, du remplacement de la clé secrète α2 par la nouvelle clé secrète α3, pour toute nouvelle instruction arithmétique et logique dont l'exécution débute après cet instant tr₂, l'usage de la clé secrète α3 et des codes C_{i,α3} enregistrés dans le premier banc auxiliaire de registres à la place, respectivement, de la clé secrète α2 et des codes C_{i,α2} enregistrés dans le second banc auxiliaire de registres pour calculer et vérifier le code Cᵣₑₛₜ₋ₜ.

4. Microprocesseur selon la revendication 3, dans lequel le module matérielle de sécurisation est configuré pour déclencher un compteur qui compte le nombre de cycles d'horloge écoulés depuis l'instant tr₁, et comparer le nombre de cycles d'horloge compté par ce compteur à un nombre prédéterminé, l'instant td₁ correspondant à l'instant où la valeur de ce compteur franchit ce nombre prédéterminé et le nombre prédéterminé étant choisi entre 5 et 300.

5. Microprocesseur selon l'une quelconque des revendications précédentes, dans le module matériel de sécurisation comporte une unité (30) de calcul apte :
- en parallèle de l'exécution, par l'unité (22) arithmétique et logique, de l'instruction arithmétique et logique qui provoque la réalisation de l'opération D₁*D₂*... *Dₙ, à exécuter le calcul du code Cᵣₑₛ₋ₜ à l'aide des codes C_{1,α1}, C_{2,α1} , ... , C_{n,α1} enregistrés dans le premier banc auxiliaire de registres et sans utiliser le résultat Dᵣₑₛ₋ₚ, et
- à enregistrer le code Cᵣₑₛ₋ₜ calculé dans le premier banc auxiliaire de registres en tant que code C_{rest-t,α1}.

6. Microprocesseur selon l'une quelconque des revendications précédentes, dans lequel le microprocesseur comporte une chaîne matérielle (10) de traitement d'instructions comportant une succession d'étages qui traitent les unes après les autres chaque instruction à exécuter du code machine, cette succession d'étages comportant au moins les étages suivants : un chargeur d'instructions (18), un décodeur (20), et l'unité arithmétique et logique (22), chacun de ces étages étant à apte à travailler en parallèle des autres étages.

7. Microprocesseur selon la revendication 6, dans lequel :
- le banc principal (120) de registres comporte au moins deux ports d'adresses et au moins deux ports de données pour permettre le chargement simultané de deux données à traiter par l'unité (22) arithmétique et logique,
- le premier et le second bancs auxiliaires (121, 122) de registres comporte chacun au moins deux ports d'adresses et au moins deux ports de données pour permettre le chargement simultané de deux codes à traiter par l'unité (30) de calcul.

8. Microprocesseur selon l'une quelconque des revendications précédentes, dans lequel la fonction Q_{α} est définie par la relation suivante : Q_{α}(Dᵢ) = P o F_{α}(Dᵢ), où P est une fonction prédéterminée et F_{α} est une fonction définie par la relation suivante : F_{α}(Dᵢ)= E₀ o...o E_{q} o ... o E_{NbE-1}(Dᵢ), où chaque fonction E_{q} est un étage de transpositions et l'indice q est un numéro d'ordre compris entre zéro à NbE-1, où NbE est un nombre entier supérieur à un et inférieur ou égal à d, chaque étage E_{q} de transpositions étant défini par la relation suivante : E_{q}(x) = T_{αm,q} o...o T_{αj,q} o ... o T_{α1,q} o T_{α0,q}(x), où :
- x est une variable dont la taille, en nombre de bits, est égale à la taille de la donnée Dᵢ,
- T_{αj,q} est une transposition conditionnelle, paramétrée par le paramètre α_{j,q}, qui permute deux blocs de bits B_{2j+1,q} et B_{2j,q} de la variable x lorsque le paramètre α_{j,q} est égal à une première valeur et qui ne permute pas ces deux blocs de bits lorsque le paramètre α_{j,q} est égal à une seconde valeur, la transposition T_{αj,q} se distinguant de toutes les autres transpositions de la fonction F_{α} par le fait que c'est la seule qui permute les deux blocs B_{2j+1,q} et B_{2j,q} lorsque le paramètre α_{j,q} est égal à la première valeur, les blocs B_{2j+1,q} et B_{2j,q} de toutes les transpositions T_{αj,q} de l'étage E_{q} étant différents les uns des autres et ne se chevauchant pas de sorte que toutes les transpositions T_{αj,q} de l'étage E_{q} peuvent être exécutées en parallèles,
- "m+1" est le nombre total de transpositions T_{αj,q} de l'étage E_{q},
- "j" est un numéro d'ordre identifiant la transposition T_{αj,q} parmi les autres transpositions de l'étage E_{q},
- le symbole "o" désigne l'opération de composition de fonctions,
- la concaténation des bits de tous les paramètres α_{j,q} de tous les étages E_{q} est égale à la valeur de la clé secrète α, et
- pour tous les étages E_{q} pour lesquels q est inférieur à NbE-1 et pour toutes les transpositions T_{αj,q} de cet étage, les blocs B_{2j+1,q} et B_{2j,q} sont situés à l'intérieur d'un même bloc de taille supérieure permuté par une transposition de l'étage supérieur E_{q+1} lorsque le paramètre de cette transposition de l'étage supérieur E_{q+1} est égal à la première valeur.

9. Procédé d'exécution d'un code binaire à l'aide d'un microprocesseur équipé d'une unité arithmétique et logique, d'un banc principal de registres et d'un module matériel de sécurisation, dans lequel :
a) l'unité arithmétique et logique exécute (74) une instruction arithmétique et logique comportant un opcode et un ou plusieurs opérandes qui, lorsqu'elle est exécutée par l'unité arithmétique et logique du microprocesseur, provoque la réalisation d'une opération D₁*D₂*... *Dₙ et l'enregistrement du résultat de cette opération dans un registre R_{res-p,0} du banc principal de registres, où :
- l'indice n est égal au nombre de données Dᵢ traitées par l'instruction arithmétique et logique, l'indice n étant supérieur ou égal à un,
- D₁ à Dₙ sont des données enregistrées, respectivement, dans des registres R_{1,0} à R_{n,0} du banc principal de registres, la taille, en nombre de bits, de chacune de ces données Dᵢ étant égale à 2^{d}, où d est un entier supérieur à deux,
- les registres R_{1,0} à R_{n,0} sont les registres désignés par les opérandes de l'instruction arithmétique et logique,
- le symbole « * » est l'opération arithmétique ou logique désignée par l'opcode de l'instruction arithmétique et logique,
b) le module matériel de sécurisation exécute les opérations suivantes :
1) à chaque fois qu'une instruction de chargement d'une donnée Dᵢ dans un registre R_{i,0} du banc principal de registres est exécutée par le microprocesseur :
- le calcul (80) d'un code C_{i,α1} à l'aide d'une relation C_{i,α1} = Q_{α1}(Dᵢ), où la fonction Q_{α1} est une fonction préprogrammée paramétrée par une clé secrète α1 préenregistrée dans le module matériel de sécurisation et connue seulement du module matériel de sécurisation, et
- l'enregistrement (82) du code C_{i,α1} calculé dans un registre R_{i,1}, correspondant au registre R_{i,0}, d'un premier banc auxiliaire de registres,
2) en parallèle de l'exécution, par l'unité arithmétique et logique, de l'instruction arithmétique et logique qui provoque la réalisation de l'opération D₁*D₂*...*Dₙ et l'enregistrement du résultat de cette opération dans le registre R_{res-p,0} du banc principal de registres, le calcul (90) d'un code Cᵣₑₛ₋ₜ à l'aide des codes C_{1,α1}, C_{2,α1} , ... , C_{n,α1} enregistrés dans le premier banc auxiliaire de registres et sans utiliser le résultat Dᵣₑₛ₋ₚ, puis
3) la vérification (110) que le code Cᵣₑₛ₋ₜ calculé correspond à un code Cᵣₑₛ₋ₚ obtenu à partir du résultat Dᵣₑₛ₋ₚ et le déclenchement (112) du signalement d'une faute d'exécution si le code Cᵣₑₛ₋ₜ ne correspond pas au code Cᵣₑₛ₋ₚ et, dans le cas contraire, l'inhibition de ce signalement,
**caractérisé en ce que** le module matériel de sécurisation exécute également les opérations suivantes :
4) à chaque fois qu'une donnée Dᵢ est écrite dans un registre R_{i,0} du banc principal de registres et avant le déclenchement du remplacement de la clé secrète α1 par une nouvelle clé secrète α2:
- le calcul (100) d'un code C_{i,α2} à l'aide d'une relation C_{i,α2} = Q_{α2}(Dᵢ) où la fonction Q_{α2} est la même fonction préprogrammée que la fonction Q_{α1} sauf que la clé secrète α1 est remplacée par la clé secrète α2, puis
- l'enregistrement (100) du code C_{i,α2} calculé dans un registre R_{i,2}, correspondant au registre R_{i,0}, d'un second banc auxiliaire de registres et le marquage de ce registre R_{i,2} comme ayant été mis à jour,
5) uniquement lorsque tous les registres du second banc auxiliaire ont été marqués comme ayant été mis à jour, le déclenchement (130), à un instant tr₁, du remplacement de la clé secrète α1 par la clé secrète α2 et, à partir de cet instant tr₁, pour toute nouvelle instruction arithmétique et logique dont l'exécution débute après cet instant tr₁, l'usage de la clé secrète α2 et des codes C_{i,α2} enregistrés dans le second banc auxiliaire de registres à la place, respectivement, de la clé secrète α1 et des codes C_{i,α1} enregistrés dans le premier banc auxiliaire de registres pour calculer et vérifier le code Cᵣₑₛₜ₋ₜ.

## Patentansprüche

1. Mikroprozessor, der mit einer arithmetischen und logischen Einheit (22), einer Registerhauptbank (120) und einem Hardware-Sicherungsmodul (28) ausgestattet ist, wobei:
a) die arithmetische und logische Einheit (22) geeignet ist, eine arithmetische und logische Anweisung auszuführen, die einen Opcode und einen oder mehrere Operanden umfasst und die, wenn sie von der arithmetischen und logischen Einheit des Mikroprozessors ausgeführt wird, das Durchführen einer Operation D₁*D₂*...*Dₙ und das Speichern des Ergebnisses dieser Operation in einem Register R_{res-p,0} der Registerhauptbank bewirkt, wobei:
- der Index n ist gleich der Anzahl von Daten Dᵢ ist, die von der arithmetischen und logischen Anweisung verarbeitet werden, wobei der Index n größer oder gleich eins ist;
- D₁ bis Dₙ Daten sind, die jeweils in Registern R_{1,0} bis R_{n,0} der Registerhauptbank gespeichert sind, wobei die Größe, in der Anzahl von Bits, jeder dieser Daten D gleich 2^{d} ist, wobei d eine ganze Zahl größer als zwei ist,
- die Register R_{1,0} bis R_{n,0} Register sind, die durch die Operanden der arithmetischen und logischen Anweisung bezeichnet werden,
- das Symbol "*" die arithmetische oder logische Operation ist, die durch den Opcode der arithmetischen und logischen Anweisung bezeichnet wird,
b) das Hardware-Sicherungsmodul dazu ausgelegt ist, die folgenden Operationen auszuführen:
1) jedes Mal, wenn eine Anweisung zum Laden eines Datums Dᵢ in ein Register R_{i,0} der Registerhauptbank von dem Mikroprozessor ausgeführt wird:
- das Berechnen eines Codes C_{i,α1} mithilfe einer Gleichung C_{i,α1} = Qₐ₁(Dᵢ), wobei die Funktion Q_{α1} eine vorprogrammierte Funktion ist, die durch einen aktuellen geheimen Schlüssel α1 parametriert wird, der in dem Hardware-Sicherungsmodul vorgespeichert ist und nur dem Hardware-Sicherungsmodul bekannt ist, und
- das Speichern des berechneten Codes C_{i,α1} in einem Register R_{i,1}, entsprechend dem Register R_{i,0}, einer ersten Registerhilfsbank;
2) parallel zu der Ausführung, durch die arithmetische und logische Einheit, der arithmetischen und logischen Anweisung, die das Durchführen der Operation D₁*D₂*...*Dₙ und das Speichern des Ergebnisses dieser Operation in dem Register R_{res-p,0} der Hauptregisterbank bewirkt, das Berechnen eines Codes Cᵣₑₛ₋ₜ mithilfe der Codes C_{1,α1}, C_{2,α1}, ..., C_{n,α1}, die in der ersten Registerhilfsbank gespeichert sind, und ohne das Ergebnis Dᵣₑₛ₋ₚ zu verwenden, dann
3) das Überprüfen, dass der berechnete Code Cᵣₑₛ₋ₜ einem Code Cᵣₑₛ₋ₚ entspricht, der ausgehend von dem Ergebnis Dᵣₑₛ₋ₚ erhalten wird, und das Auslösen der Signalisierung eines Ausführungsfehlers, falls der Code Cᵣₑₛ₋ₜ nicht dem Code Cᵣₑₛ₋ₚ entspricht, und im gegenteiligen Fall das Unterdrücken dieser Signalisierung,
**dadurch gekennzeichnet, dass** das Hardware-Sicherungsmodul (28) auch dazu ausgelegt ist, die folgenden Operationen auszuführen:
4) jedes Mal, wenn ein Datum Dᵢ in ein Register R_{i,0} der Registerhauptbank geschrieben wird, und vor dem Auslösen des Ersetzens des aktuellen geheimen Schlüssels α1 durch einen neuen geheimen Schlüssel α2:
- das Berechnung eines Codes C_{i,α2} mithilfe einer Gleichung C_{i,α2} = Q_{α2}(Dᵢ), wobei die Funktion Q_{α2} die gleiche vorprogrammierte Funktion wie die Funktion Q_{α1} ist, außer dass der aktuelle geheime Schlüssel a1 durch den neuen geheimen Schlüssel α2 ersetzt wird, dann
- das Speichern des berechneten Codes G_{i,α2} in einem Register R_{i,2}, entsprechend dem Register R_{i,0}, einer zweiten Registerhilfsbank, und das Kennzeichnen dieses Registers als aktualisiert;
5) nur dann, wenn alle Register der zweiten Hilfsbank als aktualisiert gekennzeichnet worden sind, das Auslösen, zu einem Zeitpunkt tr₁, des Ersetzens des aktuellen geheimen Schlüssels α1 durch den neuen geheimen Schlüssel α2 und, von diesem Augenblick tr₁ an, bei jeder neuen arithmetischen und logischen Anweisung, deren Ausführung nach diesem Zeitpunkt tr₁ beginnt, das Verwenden des geheimen Schlüssels α2 und der in der zweiten Registerhilfsbank gespeicherten Codes C_{i,α2} anstelle des geheimen Schlüssels a1 beziehungsweise der in der ersten Registerhilfsbank gespeicherten Codes C_{i,α1}, um den Code Cᵣₑₛₜ₋ₜ zu berechnen und zu überprüfen.

2. Mikroprozessor nach Anspruch 1, wobei das Hardware-Sicherungsmodul (28) dazu ausgelegt ist, nach dem Zeitpunkt tr₁ bei jeder arithmetischen und logischen Anweisung, deren Ausführung vor dem Zeitpunkt tr₁ begonnen hat und deren Ausführung zu dem Zeitpunkt tr₁ noch nicht beendet ist, weiterhin den geheimen Schlüssel α1 und die in der ersten Registerhilfsbank gespeicherten Codes C_{i,α1} zu verwenden, um die Berechnung des Codes Cᵣₑₛₜ₋ₜ abzuschließen und zur Überprüfung dieses Codes Cᵣₑₛₜ₋ₜ.

3. Mikroprozessor nach Anspruch 2, wobei das Hardware-Sicherungsmodul dazu ausgelegt ist:
- zwischen dem Zeitpunkt tr₁ und einem Zeitpunkt td₁ bei jeder arithmetischen und logischen Anweisung, deren Ausführung vor dem Zeitpunkt tr₁ begonnen hat und deren Ausführung zu dem Zeitpunkt tr₁ noch nicht beendet ist, weiterhin den geheimen Schlüssel a1 und die in der ersten Registerhilfsbank gespeicherten Codes C_{i,α1} zu verwenden, um die Berechnung des Codes Cᵣₑₛₜ₋ₜ abzuschließen und zur Überprüfung dieses Codes Cᵣₑₛₜ₋ₜ, und
- von dem Zeitpunkt td₁ an:
- jedes Mal, wenn ein Datum Dᵢ in ein Register R_{i,0} der Registerhauptbank geschrieben wird, und vor dem Auslösen des Ersetzens des geheimen Schlüssels α2 durch einen neuen geheimen Schlüssel α3:
- das Berechnen eines Codes C_{i,α3} mithilfe einer Gleichung C_{i,α3} = Q_{α3}(Dᵢ), wobei die Funktion Qₐ₃ die gleiche vorprogrammierte Funktion wie die Funktion Q_{α1} ist, außer dass der geheime Schlüssel a1 durch den geheimen Schlüssel a3 ersetzt wird, dann
- das Speichern des berechneten Codes C_{i,α3} in dem Register R_{i,1}, entsprechend dem Register R_{i,0}, der ersten Registerhilfsbank,
- als Reaktion auf das Auslösen, zu einem Zeitpunkt tr₂ nach dem Zeitpunkt td₁, des Ersetzens des geheimen Schlüssels α2 durch den neuen geheimen Schlüssel α3, bei jeder neuen arithmetischen und logischen Anweisung, deren Ausführung nach diesem Zeitpunkt tr₂ beginnt, das Verwenden des geheimen Schlüssels a3 und der in der ersten Registerhilfsbank gespeicherten Codes C_{i,α3} anstelle des geheimen Schlüssels α2 und der in der zweiten Registerhilfsbank gespeicherten Codes C_{i,α2}, um den Code Cᵣₑₛₜ₋ₜ zu berechnen und zu überprüfen.

4. Mikroprozessor nach Anspruch 3, wobei das Hardware-Sicherungsmodul dazu ausgelegt ist, einen Zähler auszulösen, der die Anzahl von Taktgeberzyklen zählt, die seit dem Zeitpunkt tr₁ vergangen sind, und die von diesem Zähler gezählte Anzahl von Taktgeberzyklen mit einer vorbestimmten Anzahl zu vergleichen, wobei der Zeitpunkt td₁ dem Zeitpunkt entspricht, zu dem der Wert dieses Zählers diese vorbestimmte Anzahl überschreitet, und wobei die vorbestimmte Anzahl zwischen 5 und 300 gewählt wird.

5. Mikroprozessor nach einem der vorhergehenden Ansprüche, wobei das Hardware-Sicherungsmodul eine Recheneinheit (30) umfasst, die dazu geeignet ist:
- parallel zu der Ausführung, durch die arithmetische und logische Einheit (22), der arithmetischen und logischen Anweisung, die die Durchführung der Operation D₁*D₂*...*Dₙ bewirkt, die Berechnung des Codes Cᵣₑₛ₋ₜ mithilfe der Codes C_{1,α1}, C_{2,α1}, ..., C_{n,α1} auszuführen, die in der ersten Registerhilfsbank gespeichert sind, und ohne das Ergebnis Dᵣₑₛ₋ₚ zu verwenden, und
- den berechneten Code Cᵣₑₛ₋ₜ in der ersten Registerhilfsbank als Code C_{rest-t,α1} zu speichern.

6. Mikroprozessor nach einem der vorhergehenden Ansprüche, wobei der Mikroprozessor eine Hardwarekette (10) zur Verarbeitung von Anweisungen umfasst, die eine Abfolge von Stufen umfasst, die nacheinander jede auszuführende Anweisung des Maschinencodes verarbeiten, wobei diese Abfolge von Stufen mindestens die folgenden Stufen umfasst: ein Anweisungslader (18), einen Decoder (20) und die arithmetische und logische Einheit (22), wobei jede dieser Stufen geeignet ist, parallel zu den anderen Stufen zu arbeiten.

7. Mikroprozessor nach Anspruch 6, wobei:
- die Registerhauptbank (120) mindestens zwei Adressports und mindestens zwei Datenports umfasst, um das gleichzeitige Laden von zwei von der arithmetischen und logistischen Einheit (22) zu verarbeitenden Daten zu ermöglichen,
- die erste und die zweite Registerhilfsbank (121, 122) jeweils mindestens zwei Adressports und mindestens zwei Datenports umfassen, um das gleichzeitige Laden von zwei von der Recheneinheit (30) zu verarbeitenden Codes zu ermöglichen.

8. Mikroprozessor nach einem der vorhergehenden Ansprüche, wobei die Funktion Q_{α} durch die folgende Gleichung definiert ist: Q_{α}(Dᵢ) = P o F_{α}(Dᵢ), wobei P eine vorbestimmte Funktion ist und F_{α} eine durch die folgende Gleichung definierte Funktion ist: F_{α}(Dᵢ) = E₀ o...o E_{q} o ... o E_{NbE-1}(Dᵢ), wobei jede Funktion E_{q} eine Stufe von Transpositionen ist und der Index q eine Ordnungsnummer zwischen null und NbE-1 ist, wobei NbE eine ganze Zahl größer als eins und kleiner oder gleich d ist, wobei jede Stufe E_{q} von Transpositionen durch die folgende Gleichung definiert ist: E_{q}(x) = T_{αm,q}o... o T_{αj,q} o ... o T_{α1,q} o T_{α0,q}(x), wobei:
- x eine Variable ist, deren Größe, in der Anzahl von Bits, gleich der Größe des Datums Dᵢ ist,
- T_{αj,q} eine durch den Parameter α_{j,q} parametrierte bedingte Transposition ist, die zwei Blöcke von Bits B_{2j+1,q} und B_{2j,q} der Variablen x permutiert, wenn der Parameter α_{j,q} gleich einem ersten Wert ist, und der diese zwei Blöcke von Bits nicht permutiert, wenn der Parameter α_{j,q} gleich einem zweiten Wert ist, wobei sich die Transposition T_{αj,q} von allen anderen Transpositionen der Funktion F_{α} dadurch unterscheidet, dass sie die Einzige ist, die die beiden die Blöcke B_{2j+1,q} und B_{2j,q} permutiert, wenn der Parameter α_{j,q} gleich dem ersten Wert ist, wobei die Blöcke B_{2j+1,q} und B_{2j,q} aller Transpositionen T_{αj,q} der Stufe E_{q} voneinander verschieden sind und sich nicht überschneiden, so dass alle Transpositionen T_{αj,q} der Stufe E_{q} parallel ausgeführt werden können,
- "m+1" die Gesamtzahl von Transpositionen T_{αj,q} der Stufe E_{q} ist,
- "j" eine Ordnungsnummer ist, welche die Transposition T_{αj,q} unter den anderen Transpositionen der Stufe E_{q} identifiziert,
- das Symbol "o" die Operation zur Zusammensetzung von Funktionen bezeichnet,
- die Verkettung der Bits aller Parameter α_{j,q} aller Stufen E_{q} gleich dem Wert des geheimen Schlüssels a ist, und
- bei allen Stufen E_{q}, bei denen q kleiner als NbE-1 ist, und bei allen Transpositionen T_{αj,q} dieser Stufe die Blöcke B_{2j+1,q} und B_{2j,q} innerhalb eines selben Blocks von größerer Größe gelegen sind, der durch eine Transposition der höheren Stufe E_{q+1} permutiert wird, wenn der Parameter dieser Transposition der höheren Stufe E_{q+1} gleich dem ersten Wert ist.

9. Verfahren zum Ausführen eines binären Codes mithilfe eines Mikroprozessors, der mit einer arithmetischen und logischen Einheit, einer Registerhauptbank und einem Hardware-Sicherungsmodul ausgestattet ist, wobei:
a) die arithmetische und logische Einheit eine arithmetische und logische Anweisung ausführt (74), die einen Opcode und einen oder mehrere Operanden umfasst und die, wenn sie von der arithmetischen und logischen Einheit des Mikroprozessors ausgeführt wird, das Durchführen einer Operation D₁*D₂*...*Dₙ und das Speichern des Ergebnisses dieser Operation in einem Register R_{res-p,0} der Registerhauptbank bewirkt, wobei:
- der Index n ist gleich der Anzahl von Daten Dᵢ ist, die von der arithmetischen und logischen Anweisung verarbeitet werden, wobei der Index n größer oder gleich eins ist;
- D₁ bis Dₙ Daten sind, die jeweils in Registern R_{1,0} bis R_{n,0} der Registerhauptbank gespeichert sind, wobei die Größe, in der Anzahl von Bits, jeder dieser Daten D gleich 2^{d} ist, wobei d eine ganze Zahl größer als zwei ist,
- die Register R_{1,0} bis R_{n,0} Register sind, die durch die Operanden der arithmetischen und logischen Anweisung bezeichnet werden,
- das Symbol "*" die arithmetische oder logische Operation ist, die durch den Opcode der arithmetischen und logischen Anweisung bezeichnet wird,
b) das Hardware-Sicherungsmodul die folgenden Operationen ausführt:
1) jedes Mal, wenn eine Anweisung zum Laden eines Datums Dᵢ in ein Register R_{i,0} der Registerhauptbank von dem Mikroprozessor ausgeführt wird:
- das Berechnen (80) eines Codes C_{i,α1} mithilfe einer Gleichung C_{i,α1} = Qₐ₁(Dᵢ), wobei die Funktion Q_{α1} eine vorprogrammierte Funktion ist, die durch einen geheimen Schlüssel α1 parametriert wird, der in dem Hardware-Sicherungsmodul vorgespeichert ist und nur dem Hardware-Sicherungsmodul bekannt ist, und
- das Speichern (82) des berechneten Codes C_{i,α1} in einem Register R_{i,1}, entsprechend dem Register R_{i,0}, einer ersten Registerhilfsbank;
2) parallel zu der Ausführung, durch die arithmetische und logische Einheit, der arithmetischen und logischen Anweisung, die das Durchführen der Operation D₁*D₂*...*Dₙ und das Speichern des Ergebnisses dieser Operation in das Register R_{res-p,0} der Registerhauptbank bewirkt, das Berechnen (90) eines Codes Cᵣₑₛ₋ₜ mithilfe der in der ersten Registerhilfsbank gespeicherten Codes C_{1,α1}, C_{2,α1}, ..., C_{n,α1} und ohne das Ergebnis Dᵣₑₛ₋ₚ zu verwenden, dann
3) das Überprüfen (110), dass der berechnete Code Cᵣₑₛ₋ₜ einem Code Cᵣₑₛ₋ₚ entspricht, der ausgehend von dem Ergebnis Dᵣₑₛ₋ₚ erhalten wird, und das Auslösen (112) der Signalisierung eines Ausführungsfehlers, falls der Code Cᵣₑₛ₋ₜ nicht dem Code Cᵣₑₛ₋ₚ entspricht, und im gegenteiligen Fall das Unterdrücken dieser Signalisierung,
**dadurch gekennzeichnet, dass** das Hardware-Sicherungsmodul auch die folgenden Operationen ausführt:
4) jedes Mal, wenn ein Datum Dᵢ in ein Register R_{i,0} der Registerhauptbank geschrieben wird, und vor dem Auslösen des Ersetzens des geheimen Schlüssels α1 durch einen neuen geheimen Schlüssel a2:
- das Berechnen (100) eines Codes C_{i,α2} mithilfe einer Gleichung C_{i,α2} = Q_{α2}(Dᵢ), wobei die Funktion Q_{α2} die gleiche vorprogrammierte Funktion wie die Funktion Q_{α1} ist, außer dass der geheime Schlüssel α1 durch den geheimen Schlüssel α2 ersetzt ist, dann
- das Speichern (100) des berechneten Codes C_{i,α2} in einem Register R_{i,2}, entsprechend dem Register R_{i,0}, einer zweiten Registerhilfsbank und das Kennzeichnen dieses Registers R_{i,2} als aktualisiert,
5) nur dann, wenn alle Register der zweiten Hilfsbank als aktualisiert gekennzeichnet worden sind, das Auslösen (130), zu einem Zeitpunkt tr₁, des Ersetzens des geheimen Schlüssels α1 durch den geheimen Schlüssel α2 und, von diesem Augenblick tr₁ an, bei jeder neuen arithmetischen und logischen Anweisung, deren Ausführung nach diesem Zeitpunkt tr₁ beginnt, die Verwendung des geheimen Schlüssels a2 und der in der zweiten Registerhilfsbank gespeicherten Codes C_{i,α2} anstelle des geheimen Schlüssels α1 beziehungsweise der in der ersten Registerhilfsbank gespeicherten Codes C_{i,α1}, um den Code Cᵣₑₛₜ₋ₜ zu berechnen und zu überprüfen.

## Claims

1. Microprocessor equipped with an arithmetic logic unit (22), with a main bank (120) of registers and with a hardware security module (28), in which:
a) the arithmetic logic unit (22) is capable of executing an arithmetic logic instruction comprising an opcode and one or more operands, which arithmetic logic instruction, when it is executed by the arithmetic logic unit of the microprocessor, causes an operation D₁*D₂*...*Dₙ to be performed and the result of this operation to be recorded in a register R_{res-p,0} of the main bank of registers, where:
- the index n is equal to the number of data Dᵢ processed by the arithmetic logic instruction, the index n being greater than or equal to one,
- D₁ to Dₙ are data recorded in registers R_{1,0} to R_{n,0} of the main bank of registers, respectively, the size, in number of bits, of each of these data Dᵢ being equal to 2^{d}, where d is an integer greater than two,
- the registers R_{1,0} to R_{n,0} are the registers designated by the operands of the arithmetic logic instruction,
- the symbol "*" is the arithmetic or logic operation designated by the opcode of the arithmetic logic instruction,
b) the hardware security module is configured to execute the following operations:
1) each time an instruction to load a datum Dᵢ into a register R_{i,0} of the main bank of registers is executed by the microprocessor:
- computing a code C_{i,α1} using a relationship C_{i,α1} = Qₐ₁(Dᵢ), where the function Q_{α1} is a preprogrammed function parameterized by a current secret key α1 prerecorded in the hardware security module and known only by the hardware security module, and
- recording the computed code C_{i,α1} in a register R_{i,1}, corresponding to the register R_{i,0}, of a first auxiliary bank of registers,
2) in parallel with execution, by the arithmetic logic unit, of the arithmetic logic instruction causing the operation D₁*D₂*...*Dₙ to be performed and the result of this operation to be recorded in the register R_{res-p,0} of the main bank of registers, computing a code Cᵣₑₛ₋ₜ using the codes C_{1,α1}, C_{2,α1}, ... , C_{n,α1} recorded in the first auxiliary bank of registers and without using the result Dᵣₑₛ₋ₚ, then
3) verifying that the computed code Cᵣₑₛ₋ₜ corresponds to a code Cᵣₑₛ₋ₚ obtained from the result Dᵣₑₛ₋ₚ and triggering signalling of an execution error if the code Cᵣₑₛ₋ₜ does not correspond to the code Cᵣₑₛ₋ₚ and, in the contrary case, inhibiting this signalling,
**characterized in that** the hardware security module (28) is also configured to execute the following operations:
4) each time a datum Dᵢ is written to a register R_{i,0} of the main bank of registers and before replacement of the current secret key α1 by a new secret key α2 is triggered:
- computing a code C_{i,α2} using a relationship C_{i,α2} = Q_{α2}(Dᵢ) where the function Q_{α2} is the same preprogrammed function as the function Q_{α1} except that the current secret key α1 is replaced by the new secret key α2, then
- recording the computed code C_{i,α2} in a register R_{i,2}, corresponding to the register R_{i,0}, of a second auxiliary bank of registers and marking this register as having been updated,
5) only when all the registers of the second auxiliary bank have been marked as having been updated, triggering, at a time tr₁, replacement of the current secret key α1 by the new secret key α2 and, from this time tr₁, for any new arithmetic logic instruction, the execution of which starts after this time tr₁, using the secret key α2 and the codes C_{i,α2} recorded in the second auxiliary bank of registers instead of the secret key α1 and the codes C_{i,α1} recorded in the first auxiliary bank of registers, respectively, to compute and verify the code Cᵣₑₛₜ₋ₜ.

2. Microprocessor according to Claim 1, wherein the hardware security module (28) is configured to, after the time tr₁, for any arithmetic logic instruction, the execution of which started before the time tr₁ and the execution of which has not yet ended at the time tr₁, continue to use the secret key α1 and the codes C_{i,α1} recorded in the first auxiliary bank of registers to finalize the computation of the code Cᵣₑₛₜ₋ₜ and to verify this code Cᵣₑₛₜ₋ₜ.

3. Microprocessor according to Claim 2, wherein the hardware security module is configured to:
- between the time tr₁ and a time td₁, for any arithmetic logic instruction, the execution of which started before the time tr₁ and the execution of which has not yet ended at the time tr₁, continue to use the secret key α1 and the codes C_{i,α1} recorded in the first auxiliary bank of registers to finalize the computation of the code Cᵣₑₛₜ₋ₜ and to verify this code Cᵣₑₛₜ₋ₜ, and
- from the time td₁:
- each time a datum Dᵢ is written to a register R_{i,0} of the main bank of registers and before replacement of the secret key a2 by a new secret key a3 is triggered:
- compute a code C_{i,α3} using a relationship C_{i,α3} = Q_{α3}(Dᵢ) where the function Q_{α3} is the same preprogrammed function as the function Q_{α1} except that the secret key α1 is replaced by the secret key α3, then
- record the computed code C_{i,α3} in the register R_{i,1}, corresponding to the register R_{i,0}, of the first auxiliary bank of registers,
- in response to triggering, at a time tr₂ subsequent to the time td₁, of the replacement of the secret key α2 by the new secret key α3, for any new arithmetic logic instruction, the execution of which starts after this time tr₂, use the secret key a3 and the codes C_{i,α3} recorded in the first auxiliary bank of registers instead of the secret key a2 and the codes C_{i,α2} recorded in the second auxiliary bank of registers, respectively, to compute and verify the code Cᵣₑₛₜ₋ₜ.

4. Microprocessor according to Claim 3, wherein the hardware security module is configured to trigger a counter that counts the number of clock cycles elapsed since the time tᵣ₁, and to compare the number of clock cycles counted by this counter with a predetermined number, the time td₁ corresponding to the time when the value of this counter exceeds this predetermined number, the predetermined number being between 5 and 300.

5. Microprocessor according to any one of the preceding claims, wherein the hardware security module comprises a computing unit (30) capable of:
- in parallel with execution, by the arithmetic logic unit (22), of the arithmetic logic instruction causing the operation D₁*D₂*...*Dₙ to be performed, executing computation of the code Cᵣₑₛ₋ₜ using the codes C_{1,α1}, C_{2,α1} , ... , C_{n,α1} recorded in the first auxiliary bank of registers and without using the result Dᵣₑₛ₋ₚ, and
- recording the computed code Cᵣₑₛ₋ₜ in the first auxiliary bank of registers by way of code Cᵣₑₛₜ₋ₜ,_{α1}.

6. Microprocessor according to any one of the preceding claims, wherein the microprocessor comprises a hardware pipeline (10) for processing instructions comprising a succession of stages that process one after another each instruction to be executed of the machine code, this succession of stages comprising at least the following stages: an instruction loader (18), a decoder (20), and the arithmetic logic unit (22), each of these stages being capable of working in parallel with the other stages.

7. Microprocessor according to Claim 6, wherein:
- the main bank (120) of registers comprises at least two address ports and at least two data ports with a view to making it possible to simultaneously load two data to be processed by the arithmetic logic unit (22),
- the first and second auxiliary banks (121, 122) of registers each comprise at least two address ports and at least two data ports with a view to making it possible to simultaneously load two codes to be processed by the computing unit (30).

8. Microprocessor according to any one of the preceding claims, wherein the function Q_{α} is defined by the following relationship: Q_{α}(Dᵢ) = P o F_{α}(Dᵢ), where P is a predetermined function and F_{α} is a function defined by the following relationship: F_{α}(Dᵢ)= E₀ o...o E_{q} o ... o E_{NbE-1}(Dᵢ), where each function E_{q} is a transposition stage and the index q is an order number between zero and NbE-1, where NbE is an integer greater than one and less than or equal to d, each transposition stage E_{q} being defined by the following relationship: E_{q}(x) = T_{αm,q} o...o T_{αj,q} o ... o T_{α1,q} o T_{α0,q}(x), where:
- x is a variable whose size, in number of bits, is equal to the size of the datum Dᵢ,
- T_{αj,q} is a conditional transposition, parameterized by the parameter α_{j,q}, that permutes two blocks of bits B_{2j+1,q} and B_{2j,q} of the variable x when the parameter α_{j,q} is equal to a first value and that does not permute these two blocks of bits when the parameter α_{j,q} is equal to a second value, the transposition T_{αj,q} differing from all the other transpositions of the function F_{α} in that it is the only one that permutes the two blocks B_{2j+1,q} and B_{2j,q} when the parameter α_{j,q} is equal to the first value, the blocks B_{2j+1,q} and B_{2j,q} of all the transpositions T_{αj,q} of the stage E_{q} being different from one another and not overlapping so that all the transpositions T_{αj,q} of the stage E_{q} may be executed in parallel,
- "m+1" is the total number of transpositions T_{αj,q} of the stage E_{q},
- "j" is an order number identifying the transposition T_{αj,q} among the other transpositions of the stage E_{q},
- the symbol "o" designates the operation of function composition,
- the concatenation of the bits of all the parameters α_{j,q} of all the stages E_{q} is equal to the value of the secret key α, and
- for all the stages E_{q} for which q is less than NbE-1 and for all the transpositions T_{αj,q} of this stage, the blocks B_{2j+1,q} and B_{2j,q} are located inside a given block of larger size permuted by a transposition of the above stage E_{q+1} when the parameter of this transposition of the above stage E_{q+1} is equal to the first value.

9. Method for executing a binary code using a microprocessor equipped with an arithmetic logic unit, with a main bank of registers and with a hardware security module, in which:
a) the arithmetic logic unit (74) executes an arithmetic logic instruction comprising an opcode and one or more operands, which arithmetic logic instruction, when it is executed by the arithmetic logic unit of the microprocessor, causes an operation D₁*D₂*...*Dₙ to be performed and the result of this operation to be recorded in a register R_{res-p,0} of the main bank of registers, where:
- the index n is equal to the number of data Dᵢ processed by the arithmetic logic instruction, the index n being greater than or equal to one,
- D₁ to Dₙ are data recorded in registers R_{1,0} to R_{n,0} of the main bank of registers, respectively, the size, in number of bits, of each of these data Dᵢ being equal to 2^{d}, where d is an integer greater than two,
- the registers R_{1,0} to R_{n,0} are the registers designated by the operands of the arithmetic logic instruction,
- the symbol "*" is the arithmetic or logic operation designated by the opcode of the arithmetic logic instruction,
b) the hardware security module executes the following operations:
1) each time an instruction to load a datum Dᵢ into a register R_{i,0} of the main bank of registers is executed by the microprocessor:
- computing (80) a code C_{i,α1} using a relationship C_{i,α1} = Q_{α1}(Dᵢ), where the function Q_{α1} is a preprogrammed function parameterized by a secret key α1 prerecorded in the hardware security module and known only by the hardware security module, and
- recording (82) the computed code C_{i,α1} in a register R_{i,1}, corresponding to the register R_{i,0}, of a first auxiliary bank of registers,
2) in parallel with execution, by the arithmetic logic unit, of the arithmetic logic instruction causing the operation D₁*D₂*...*Dₙ to be performed and the result of this operation to be recorded in the register R_{res-p,0} of the main bank of registers, computing (90) a code Cᵣₑₛ₋ₜ using the codes C_{1,α1}, C_{2,α1}, ... , C_{n,α1} recorded in the first auxiliary bank of registers and without using the result Dᵣₑₛ₋ₚ, then
3) verifying (110) that the computed code Cᵣₑₛ₋ₜ corresponds to a code Cᵣₑₛ₋ₚ obtained from the result Dᵣₑₛ₋ₚ and triggering (112) signalling of an execution error if the code Cᵣₑₛ₋ₜ does not correspond to the code Cᵣₑₛ₋ₚ and, in the contrary case, inhibiting this signalling,
**characterized in that** the hardware security module also executes the following operations:
4) each time a datum Dᵢ is written to a register R_{i,0} of the main bank of registers and before replacement of the secret key α1 by a new secret key a2 is triggered:
- computing (100) a code C_{i,α2} using a relationship C_{i,α2} = Q_{α2}(Dᵢ) where the function Q_{α2} is the same preprogrammed function as the function Q_{α1} except that the secret key α1 is replaced by the secret key a2, then
- recording (100) the computed code C_{i,α2} in a register R_{i,2}, corresponding to the register R_{i,0}, of a second auxiliary bank of registers and marking this register R_{i,2} as having been updated,
5) only when all the registers of the second auxiliary bank have been marked as having been updated, triggering (130), at a time tr₁, replacement of the secret key α1 by the secret key a2 and, from this time tr₁, for any new arithmetic logic instruction, the execution of which starts after this time tr₁, using the secret key a2 and the codes C_{i,α2} recorded in the second auxiliary bank of registers instead of the secret key α1 and the codes C_{i,α1} recorded in the first auxiliary bank of registers, respectively, to compute and verify the code Cᵣₑₛₜ₋ₜ.
